# EUROPEAN PATENT SPECIFICATION

(11) **EP 3 280 072 B1**
(45) Date of publication and mention of the grant of the patent: **10.07.2019**
(21) Application number: 15892924.0
(22) Date of filing: 27.05.2015
(51) Int. Cl.: H04B 10/2575, H04B 3/46, H04N 21/61

(54) **RETURN-PATH NOISE MONITORING METHOD, DEVICE AND SYSTEM**
RÜCKWEG-RAUSCHÜBERWACHUNGSVERFAHREN, -VORRICHTUNG UND -SYSTEM
PROCÉDÉ DISPOSITIF ET SYSTÈME DE SURVEILLANCE DE BRUIT DE TRAJET DE RETOUR

(43) Date of publication of application: 07.02.2018
(73) Proprietor: Huawei Technologies Co. Ltd., Shenzhen, Guangdong 518129 (CN)
(72) Inventor: GAO, Xingguo, Shenzhen Guangdong 518129 (CN)
(74) Representative: Isarpatent
(86) International application number: PCT/CN2015/079932
(87) International publication number: WO 2016/187843

(56) References cited:
- CN-A- 103 369 727
- CN-A- 104 467 970
- US-A1- 2008 101 210
- US-A1- 2012 093 157
- US-A1- 2014 123 203
- US-A1- 2014 254 392
- US-B1- 6 385 773
- US-B1- 6 915 530

## Description

### TECHNICAL FIELD

The present invention relates to the communications field, and in particular, to a return-channel noise monitoring method, device, and system.

### BACKGROUND

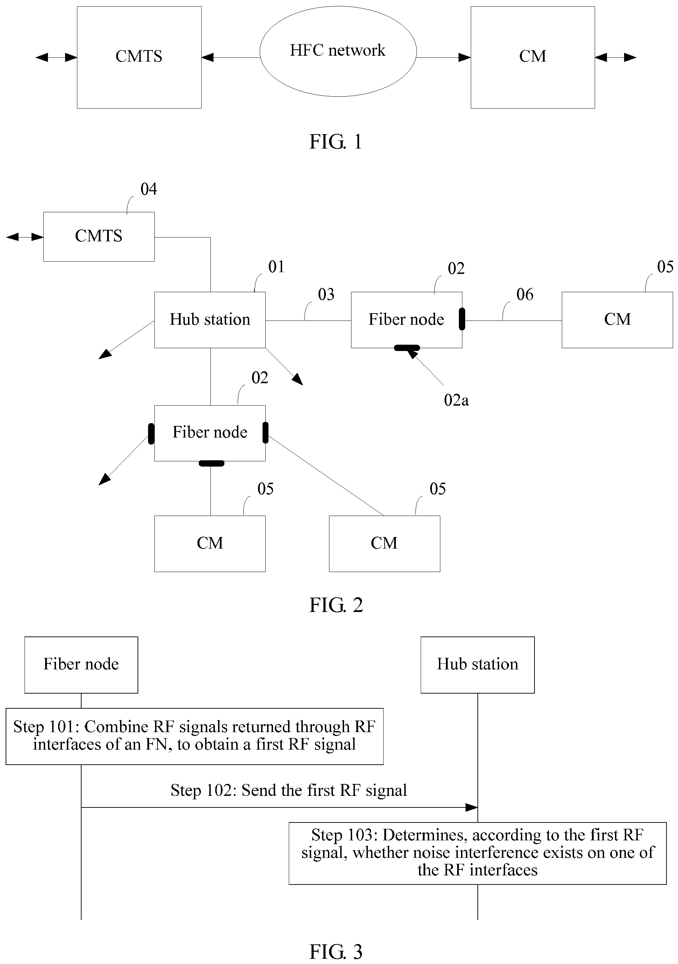

A hybrid fiber coaxial (HFC for short) network-based data transmission system is a system using an HFC network to perform bidirectional data transmission. As shown in FIG. 1, a peripheral device of the system is referred to as a cable modem termination system (in short CMTS), and a terminal device of the system is referred to as a cable modem (in short CM).

Network elements of the HFC network mainly include a hub station and a fiber node (FN for short). The hub station is deployed on a side of the CMTS, and the FN is deployed on a side of the CM. The hub station communicates with the FN by using a fiber. On a return channel (also referred to as an upstream channel or a reverse channel), a signal is transmitted from the side of the CM, passes by the FN and the hub station in sequence, and arrives at the CMTS. A data network device processing a return signal is deployed in the HFC network. When the data network device is deployed on the FN, the HFC network is referred to as a distributed network.

Generally, whether the HFC network can ensure transmission quality of a return signal depends on whether noise in the return signal can be controlled at a relatively low level. Therefore, the noise in the return signal needs to be monitored in real time. Currently, the noise in the return signal is monitored only on a side of the hub station. For a distributed network, a return signal noise monitoring method is provided in the prior art. The method includes: after receiving a radio frequency (in short RF) signal from a side of a CM, sending, by an FN, the RF signal to a data network device for processing, and converting the RF signal into a digital signal and transferring the digital signal to a hub station by using a fiber. The hub station restores the RF signal from the digital signal and obtains a return signal spectrum according to the RF signal.

The prior art has at least the following disadvantage: A bandwidth requirement for a data channel is excessively high when an RF signal is converted into a digital signal for transmission. For example, it is assumed that one FN supports return signals of n RF interfaces. When a data channel supports an upstream frequency up to 85 MHz in the Data Over Cable Service Interface Specification (DOCSIS for short) 3.0 standard, the FN requires a bandwidth of approximately 2 Gbps to sample return signal data of one RF interface, and requires a bandwidth of approximately 2×n Gbps to sample return signal data of all RF interfaces. When the data channel supports an upstream frequency up to 204 MHz in the DOCSIS 3.1 standard, the FN requires a bandwidth of approximately 5 Gbps to sample return signal data of one RF interface, and requires a bandwidth of approximately 5×n Gbps to sample return signal data of all RF interfaces. With such a high bandwidth requirement, the FN cannot transmit the digital signal obtained after conversion to a hub station in real time.

In the published patent prior art, the following documents relate to the technological background of the present invention:

| | |
|---|---|
| D1 | US 6 385 773 B1 |
| D2 | US 6 915 530 B1 |
| D3 | US 2014/123203 A1 |
| D4 | US 2014/254392 A1 |

Document D1 discloses a return-channel noise monitoring method wherein the method comprises receiving, by a headend, a radio frequency channel shared in time multiplexing by several cable modems. A spectrum analyser in the headend continuously monitors other frequency channels and determines that such other frequency channels have low noise if they have a low power measurement. When the used frequency channel reaches an unacceptable signal-to-noise ration, the CMTS begins searching for a cleaner unused frequency channel for the upstream signal and the spectrum analyzer instructs the headend to change the upstream frequency channel for a group of cable modems to the very frequency channel having been determined to have a lower noise. Documents D2-D4 disclose other monitoring methods with other details. In particular, D2 relates to ingress detection and characterization by time frequency map. Document D3 relates to a mthod and system for locating ingress utilizing customer premises equipment and document D4 relates to a network implementation of spectrum analyzer.

### SUMMARY

The present invention provides a return-channel noise monitoring method, device, and system, for the object to lower a bandwidth requirement for a data channel. This object is solved by a method of claim 1 and claim 3 respectively carried out on a hub side and a fiber node side. The object is also solved by a device according to claim 5 and claim 7 respectively relating to the hub side and the fiber node side. Furthermore, a system according to claim 8 including such devices provides a solution to this object. Advantageous embodiments and improvements of the invention are listed in the dependent claims. Hereinafter, before coming to a detailed description of the invention with reference to its embodiments, some aspects of the invention which contribute to the understanding of the invention are listed separately below.

According to a first aspect, the present invention provides a return-channel noise monitoring method, where the method includes:
receiving, by a hub station, a first radio frequency RF signal sent by a fiber node FN, where the first RF signal is obtained by the FN by combining RF signals returned through RF interfaces of the FN; and
determining, according to the first RF signal, whether noise interference exists on one of the RF interfaces.

With reference to the first aspect, in a first implementation of the first aspect, the determining, according to the first RF signal, whether noise interference exists on one of the RF interfaces includes:
determining whether noise in the first RF signal exceeds a threshold; and
when the noise in the first RF signal does not exceed the threshold, determining that the noise interference exists on none of the RF interfaces; or
when the noise in the first RF signal exceeds the threshold, determining that the noise interference exists on at least one of the RF interfaces.

With reference to the first aspect or the first implementation of the first aspect, in a second implementation of the first aspect, after the determining that the noise interference exists on at least one of the RF interfaces, the method further includes:
determining a frequency and/or a frequency band of the noise interference in the first RF signal;
receiving a second digital signal sent by the FN, where the second digital signal is sent by the FN after the FN receives a first digital signal sent by the hub station, the first digital signal is used to indicate the frequency and/or the frequency band of the noise interference, the second digital signal is obtained by the FN by means of conversion after the FN samples some of the RF signals returned through the RF interfaces, and frequencies and/or frequency bands of the some of the RF signals returned through the RF interfaces are the same as the frequency and/or the frequency band of the noise interference;
converting the second digital signal to obtain the some of the RF signals returned through the RF interfaces; and
calculating noise in the some of the RF signals returned through the RF interfaces, to determine the RF interface on which the noise interference exists.

With reference to the first aspect or the first implementation of the first aspect, in a third implementation of the first aspect, after the determining that the noise interference exists on at least one of the RF interfaces, the method further includes:
receiving a second RF signal sent by the FN, where the second RF signal is sent by the FN after the FN receives a third digital signal sent by the hub station, the third digital signal is used to instruct the FN to sample, in sequence and based on time periods, the RF signals returned through the RF interfaces, and the second RF signal is obtained by the FN by sampling, in sequence and based on the time periods, the RF signals returned through the RF interfaces;
restoring, from the second RF signal, the RF signals returned through the RF interfaces; and
calculating signal-to-noise ratios of the restored RF signals returned through the RF interfaces, to determine the RF interface on which the noise interference exists.

According to a second aspect, the present invention provides a return-channel noise monitoring method, where the method includes:
combining, by a fiber node FN, radio frequency RF signals returned through RF interfaces of the FN, to obtain a first RF signal; and
sending the first RF signal to a hub station.

With reference to the second aspect, in a first implementation of the second aspect, after the sending the first RF signal to a hub station, the method further includes:
receiving a first digital signal sent by the hub station, where the first digital signal is used to indicate a frequency and/or a frequency band of noise interference;
sampling some of the RF signals returned through the RF interfaces and converting the sampled signals to obtain a second digital signal, where frequencies and/or frequency bands of the some of the RF signals returned through the RF interfaces are the same as the frequency and/or the frequency band of the noise interference; and
sending the second digital signal to the hub station.

With reference to the second aspect, in a second implementation of the second aspect, after the sending the first RF signal to a hub station, the method further includes:
receiving a third digital signal sent by the hub station;
as instructed by the third digital signal, sampling, in sequence and based on time periods, the RF signals returned through the RF interfaces, to obtain a second RF signal; and
sending the second RF signal to the hub station.

According to a third aspect, the present invention provides a return-channel noise monitoring device, where the device includes:
a first transceiver module, configured to receive a first radio frequency RF signal sent by a fiber node FN, where the first RF signal is obtained by the FN by combining RF signals returned through RF interfaces of the FN; and
a first determining module, configured to determine, according to the first RF signal, whether noise interference exists on one of the RF interfaces.

With reference to the third aspect, in a first implementation of the third aspect, the first determining module includes:
a judging unit, configured to determine whether noise in the first RF signal exceeds a threshold;
a first determining unit, configured to: when the noise in the first RF signal does not exceed the threshold, determine that the noise interference exists on none of the RF interfaces; and
a second determining unit, configured to: when the noise in the first RF signal exceeds the threshold, determine that the noise interference exists on at least one of the RF interfaces.

With reference to the third aspect or the first implementation of the third aspect, in a second implementation of the third aspect, the device further includes a second determining module, where
the second determining module is configured to determine a frequency and/or a frequency band of the noise interference in the first RF signal when it is determined that the noise interference exists on at least one of the RF interfaces;
the first transceiver module is further configured to receive a second digital signal sent by the FN, where the second digital signal is sent by the FN after the FN receives a first digital signal sent by the hub station, the first digital signal is used to indicate the frequency and/or the frequency band of the noise interference, the second digital signal is obtained by the FN by means of conversion after the FN samples some of the RF signals returned through the RF interfaces, and frequencies and/or frequency bands of the some of the RF signals returned through the RF interfaces are the same as the frequency and/or the frequency band of the noise interference; and
the second determining module is further configured to: convert the second digital signal to obtain the some of the RF signals returned through the RF interfaces; and calculate noise in the some of the RF signals returned through the RF interfaces, to determine the RF interface on which the noise interference exists.

With reference to the third aspect or the first implementation of the third aspect, in a third implementation of the third aspect, the device further includes a third determining module, where
the first transceiver module is further configured to receive a second RF signal sent by the FN, where the second RF signal is sent by the FN after the FN receives a third digital signal sent by the hub station, the third digital signal is used to instruct the FN to sample, in sequence and based on time periods, the RF signals returned through the RF interfaces, and the second RF signal is obtained by the FN by sampling, in sequence and based on the time periods, the RF signals returned through the RF interfaces; and
the third determining module is configured to: restore, from the second RF signal, the RF signals returned through the RF interfaces; and calculate signal-to-noise ratios of the restored RF signals returned through the RF interfaces, to determine the RF interface on which the noise interference exists.

According to a fourth aspect, the present invention provides a return-channel noise monitoring device, where the device includes:
a combination module, configured to combine radio frequency RF signals returned through RF interfaces, to obtain a first RF signal; and
a second transceiver module, configured to send the first RF signal to a hub station.

With reference to the fourth aspect, in a first implementation of the fourth aspect,
the second transceiver module is further configured to receive a first digital signal sent by the hub station, where the first digital signal is used to indicate a frequency and/or a frequency band of noise interference;
the device further includes a first sampling module, where
the first sampling module is configured to: sample some of the RF signals returned through the RF interfaces and convert the sampled signals to obtain a second digital signal, where frequencies and/or frequency bands of the some of the RF signals returned through the RF interfaces are the same as the frequency and/or the frequency band of the noise interference; and
the second transceiver module is further configured to send the second digital signal to the hub station.

With reference to the fourth aspect, in a second implementation of the fourth aspect,
the second transceiver module is further configured to receive a third digital signal sent by the hub station;
the device further includes a second sampling module, where
the second sampling module is configured to: as instructed by the third digital signal, sample, in sequence and based on time periods, the RF signals returned through the RF interfaces, to obtain a second RF signal; and
the second transceiver module is further configured to send the second RF signal to the hub station.

According to a fifth aspect, the present invention provides a return-channel noise monitoring system, where the system includes a first device and a second device, where
the first device is the device according to the third aspect, and the second device is the device according to fourth aspect.

The technical solutions provided in the embodiments of the present invention have the following beneficial effects:

A first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces. In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an HFC network-based data transmission system according to the present invention;
FIG. 2 is a schematic diagram of a network architecture of an HFC network according to an embodiment of the present invention;
FIG. 3 to FIG. 5 are flowcharts of a return-channel noise monitoring method according to embodiments of the present invention;
FIG. 6 to FIG. 9 are schematic structural diagrams of a return-channel noise monitoring device according to embodiments of the present invention;
FIG. 10 to FIG. 13 are schematic structural diagrams of another return-channel noise monitoring device according to embodiments of the present invention;
FIG. 14 is a schematic structural diagram of a return-channel noise monitoring system according to an embodiment of the present invention;
FIG. 15 to FIG. 17 are flowcharts of another return-channel noise monitoring method according to embodiments of the present invention;
FIG. 18 to FIG. 20 are schematic structural diagrams of still another return-channel noise monitoring device according to embodiments of the present invention;
FIG. 21 to FIG. 23 are schematic structural diagrams of yet another return-channel noise monitoring device according to embodiments of the present invention; and
FIG. 24 is a schematic structural diagram of another return-channel noise monitoring system according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

For ease of understanding of the technical solutions provided in the embodiments of the present invention, a network architecture of a hybrid fiber coaxial (HFC for short) network is first described with reference to FIG. 2. As described above, network elements of the HFC network mainly include a hub station 01 and a fiber node (FN for short) 02. The hub station 01 communicates with the FN 02 by using a fiber 03. The hub station 01 is deployed on a side of a peripheral device, for example, a cable modem termination system (CMTS for short) 04, and the FN 02 is deployed on a side of a cable modem (CM for short) 05. It should be noted that the hub station 01 may include the peripheral device. That is, the hub station 01 is the peripheral device. Other devices such as an amplifier and a tap may be deployed between the FN 02 and the CM 05. This is not limited in the embodiments. In addition, the CM 05 may communicate with terminal devices such as a set top box, a television, and a personal computer (PC for short) separately.

There are more hub stations 01 as the HFC network scales up, and the hub stations 01 can communicate with each other. At least one hub station 01 is configured in a small HFC network. A quantity of FNs 02 depends on an operational capability of the hub station 01. Generally, one hub station 01 can support dozens of (for example, 60) FNs 02. One FN 02 may include several (for example, 8) radio frequency (RF for short) interfaces 02a. Each RF interface 02a communicates with the CM 05 by using a coaxial cable 06, and one RF interface 02a can support multiple CMs 05.

It should be understood that the HFC network shown in FIG. 2 is only an example, and the network architecture of the HFC network may be another architecture.

For the existing distributed HFC network, at least the RF interfaces 02a, an optical network unit (ONU for short), and a data network device are configured on the FN 02, and at least an optical line terminal (OLT) is configured in the hub station 01. The RF interface is configured to send an RF signal to the side of the CM 05 and return an RF signal that is from the side of the CM 05. The data network device is configured to process the RF signal returned through the RF interface, to obtain a processing result. The OLT is configured to: convert the processing result obtained by the data network device into a digital signal, modulate the digital signal into an optical signal, and transmit the optical signal to the ONU. The ONU is configured to: receive the optical signal and convert the optical signal into the digital signal for output. The OLT and the ONU are interconnection devices, and are configured to convert and transmit an optical signal and a digital signal. It can be learned that in the existing distributed HFC network, only transmission of a digital signal is supported between the hub station 01 and the FN 02.

In the embodiments, a digital signal transferred between the FN 02 and the hub station 01 may be further modulated into an optical signal, and then the optical signal is transmitted to a peer end by using a fiber. In addition, when an exchange network is established between the FN 02 and the hub station 01, the digital signal transferred between the FN 02 and the hub station 01 may also be directly transmitted to a peer end by using the exchange network.

Based on the network architecture of the HFC network shown in FIG. 2, the embodiments of the present invention provide two sets of return-channel noise monitoring methods, devices, and systems. In Embodiment 1 to Embodiment 8, a first set of a return-channel noise monitoring method, device, and system is described in detail. In Embodiment 9 to Embodiment 16, a second set of a return-channel noise monitoring method, device, and system is described in detail.

### First set of return-channel noise monitoring method, device, and system

### Embodiment 1

This embodiment of the present invention provides a return-channel noise monitoring method. Referring to FIG. 3, a process of the method includes the following steps.

Step 101: An FN combines RF signals returned through RF interfaces of the FN, to obtain a first RF signal.

The FN may be any FN in the HFC network shown in FIG. 2.

Step 102: The FN sends the first RF signal to a hub station.

The hub station may be a hub station that establishes a return channel to the FN.

During specific implementation, the FN may modulate the first RF signal into an optical signal, and send the optical signal to the hub station by using an output unit (a transmitter, TX for short). When the first RF signal is obtained by the FN by combining the RF signals returned through the RF interfaces, the first RF signal is a single-channel signal, and the FN may send the first RF signal by using one TX.

The hub station receives the first RF signal sent by the FN.

During specific implementation, the hub station may receive, by using a receiving unit (a receiver, RX for short), the optical signal into which the first RF signal is modulated and that is sent by the TX, and output the first RF signal. When the hub station supports more than one FN, the hub station may provide at least one RX to each FN.

The TX and the RX are interconnection devices. The TX is configured to convert an RF signal into an optical signal, and the RX is configured to convert an optical signal into an RF signal. Working principles of the TX and the RX are known to a person skilled in the art, and are not described herein. In this embodiment, the FN sends the RF signal to the hub station by using the TX, and the hub station receives the RF signal by using the RX.

Step 103: The hub station determines, according to the first RF signal, whether noise interference exists on one of the RF interfaces.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

### Embodiment 2

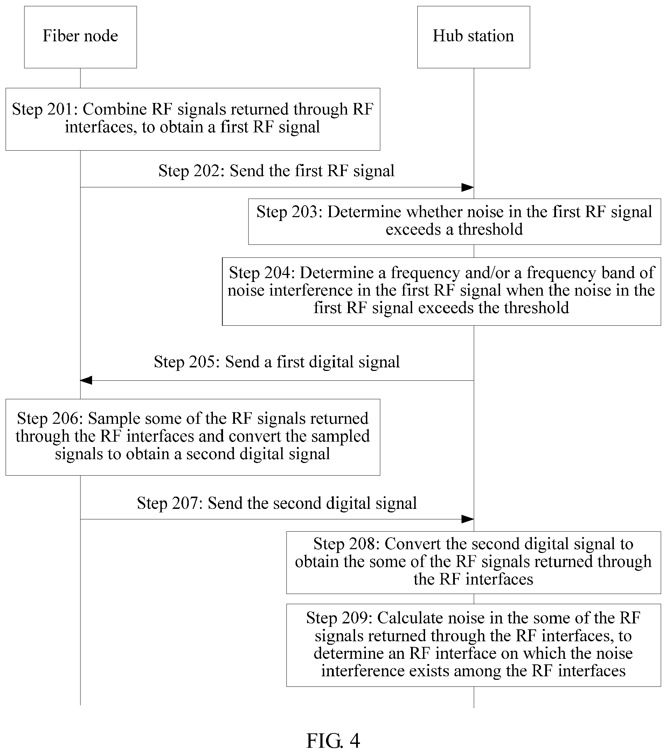

This embodiment of the present invention provides a return-channel noise monitoring method. In this embodiment, how a hub station determines whether noise interference exists on one of RF interfaces and determines an RF interface on which noise interference exists is described in detail. Referring to FIG. 4, a process of the method includes the following steps.

Step 201: An FN combines RF signals returned through RF interfaces, to obtain a first RF signal.

The first RF signal is a combined signal. The FN may combine, by using a device having a combiner function, for example, a mixer, the RF signals returned through the RF interfaces, to obtain the combined signal.

Step 202: The FN sends the first RF signal to the hub station.

The hub station receives the first RF signal sent by the FN.

Step 203: The hub station determines whether noise in the first RF signal exceeds a threshold.

When the noise in the first RF signal exceeds the threshold, it is determined that noise interference exists on at least one of the RF interfaces of the FN, and step 204 is performed. When the noise in the first RF signal does not exceed the threshold, it is determined that noise interference exists on none of the RF interfaces of the FN, and the first RF signal sent by the FN continues to be received.

The hub station analyzes a signal-to-noise ratio of the first RF signal. When the signal-to-noise ratio exceeds a specified threshold, it is determined that the FN includes an RF interface on which noise interference exists, and step 204 is performed.

Step 204: The hub station determines a frequency and/or a frequency band of noise interference in the first RF signal.

When the noise in the first RF signal exceeds the threshold, the hub station may further obtain, by means of analysis, the frequency and/or the frequency band of the noise interference in the first RF. In this embodiment, the frequency and/or the frequency band of the noise interference may be a frequency and/or a frequency band at/within which the noise exceeds the threshold.

Step 205: The hub station sends a first digital signal to the FN.

In addition, the hub station sends the first digital signal to the FN. The first digital signal is used to indicate the frequency and/or the frequency band of the noise interference. It can be understood that the first digital signal may be modulated into an optical signal and transferred to the FN by using an OLT.

The FN receives the first digital signal.

Step 206: The FN samples some of the RF signals returned through the RF interfaces and converts the sampled signals to obtain a second digital signal.

Frequencies and/or frequency bands of the some of the RF signals returned through the RF interfaces are the same as the frequency and/or the frequency band of the noise interference.

After receiving the first digital signal, the FN performs an operation of obtaining the second digital signal.

Step 207: The FN sends the second digital signal to the hub station.

The hub station receives the second digital signal sent by the FN.

Step 208: The hub station converts the second digital signal to obtain the some of the RF signals returned through the RF interfaces.

Step 209: The hub station calculates noise in the some of the RF signals returned through the RF interfaces, to determine an RF interface on which the noise interference exists among the RF interfaces.

In this embodiment, the RF interface on which the noise interference exists may be an RF interface on which the noise exceeds the preset threshold.

According to step 204 to step 209, the hub station determines the RF interface on which the noise interference exists.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

Moreover, the FN sends a second digital signal to the hub station. Because the second digital signal is obtained by the FN by sampling some of the RF signals returned through the RF interfaces and converting the sampled signals, and frequencies and/or frequency bands of the some of the RF signals returned through the RF interfaces are the same as a frequency and/or a frequency band of the noise interference, the frequency and/or the frequency band of the noise interference is certainly lower than all frequency bands of the RF signals returned through the RF interfaces. Therefore, compared with a data bandwidth occupied by all the frequency bands of the RF signals returned through the RF interfaces, a data bandwidth occupied by the second digital signal is certainly smaller.

### Embodiment 3

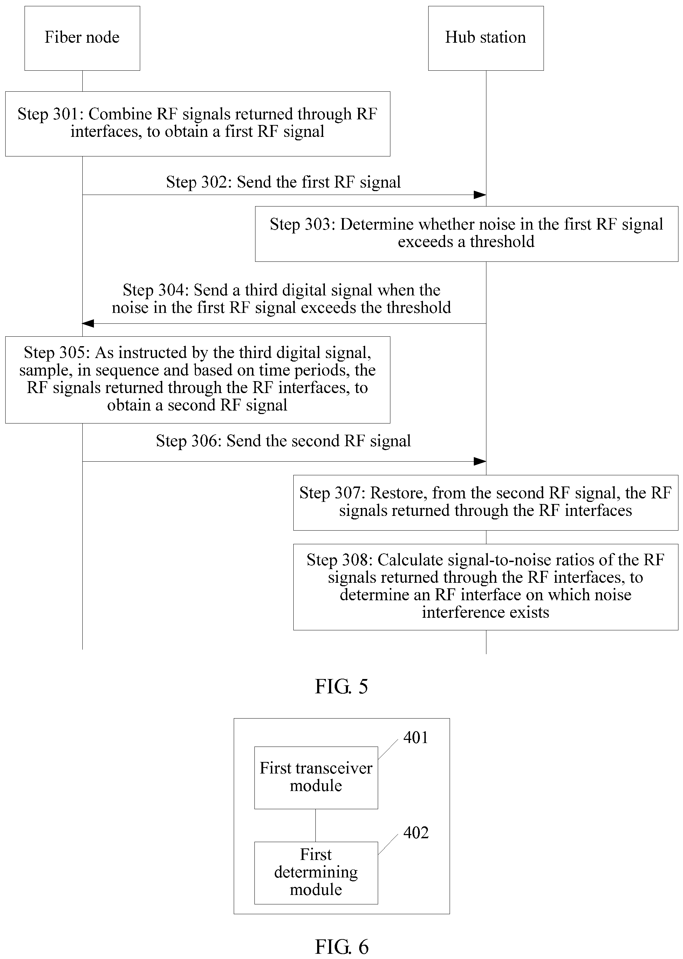

This embodiment of the present invention provides a return-channel noise monitoring method. In this embodiment, how a hub station determines whether noise interference exists on one of RF interfaces and determines an RF interface on which noise interference exists is described in detail. Referring to FIG. 5, a process of the method includes the following steps.

Step 301: An FN combines RF signals returned through RF interfaces, to obtain a first RF signal.

Step 301 is the same as step 201 in Embodiment 2. Details are not described herein again.

Step 302: The FN sends the first RF signal to the hub station.

The hub station receives the first RF signal sent by the FN.

Step 302 is the same as step 202 in Embodiment 2. Details are not described herein again.

Step 303: The hub station determines whether noise in the first RF signal exceeds a threshold.

When the noise in the first RF signal exceeds the threshold, it is determined that noise interference exists on at least one RF interface of the FN, and step 304 is performed. When the noise in the first RF signal does not exceed the threshold, it is determined that noise interference exists on none of the RF interfaces of the FN, and the first RF signal sent by the FN continues to be received.

Step 304: The hub station sends a third digital signal to the FN.

The third digital signal is used to instruct the FN to sample, in sequence and based on time periods, the RF signals returned through the RF interfaces of the FN, and report the sampled signals to the hub station.

It can be understood that the third digital signal may be modulated into an optical signal and transferred to the FN by using an OLT.

The FN may receive the third digital signal by using an ONU.

Step 305: As instructed by the third digital signal, the FN samples, in sequence and based on time periods, the RF signals returned through the RF interfaces, to obtain a second RF signal.

It is assumed that the FN includes four RF interfaces. The FN may sample, within a first specified time period, an RF signal returned through a first RF interface, sample, within a second specified time period, an RF signal returned through a second RF interface, and by analogy, sample, within a fourth specified time period, an RF signal returned through a fourth RF interface.

The second RF signal includes the signals sampled by the FN from the first specified time period to the fourth specified time period. That is, the second RF signal is a signal obtained by splicing the sampled signals of the RF interfaces. For example, within the first specified time period, the second RF signal is the RF signal returned through the first RF interface, and within the third specified time period, the second RF signal is the RF signal returned through the third RF interface.

Step 306: The FN sends the second RF signal to the hub station.

The hub station receives the second RF signal.

Step 307: The hub station restores, from the second RF signal, the RF signals returned through the RF interfaces.

The hub station may restore, from the second RF signal in either of the following two restoration manners, the RF signals returned through the RF interfaces. A first restoration manner includes: The hub station receives a fourth digital signal sent by the FN, where the fourth digital signal includes sampling time period information of the RF interfaces; and the hub station restores, from the second RF signal according to the sampling time period information of the RF interfaces, the RF signals that are returned through the RF interfaces within respective corresponding sampling time periods.

A second restoration manner includes: The hub station obtains sampling time period information of the RF interfaces from a preset correspondence between sampling time period information and an RF interface; and the hub station restores, from the second RF signal according to the sampling time period information of the RF interfaces, the RF signals that are returned through the RF interfaces within respective corresponding sampling time periods.

Specifically, the two restoration manners are respectively described in detail in Embodiment 10 and Embodiment 11 of the present invention. Details are not described herein.

Step 308: The hub station calculates signal-to-noise ratios of the restored RF signals returned through the RF interfaces, to determine an RF interface on which noise interference exists.

When a calculated signal-to-noise ratio of an RF signal returned through an RF interface exceeds a preset threshold, it is determined that the RF interface is an RF interface on which noise interference exists. Conversely, when a calculated signal-to-noise ratio of an RF signal returned through an RF interface does not exceed the preset threshold, it is determined that the RF interface is not interfered by noise.

According to step 304 to step 308, the hub station determines the RF interface on which the noise interference exists.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

Moreover, the FN sends a second RF signal to the hub station. Because the second RF signal is obtained by sampling, in sequence and based on time periods, the RF signals returned through the RF interfaces of the FN, the second RF signal can be transferred by using one RF signal line, for example, a pair of a TX and an RX. In this way, networking is simplified and costs are reduced.

### Embodiment 4

This embodiment of the present invention provides a return-channel noise monitoring device. The device may be installed in a hub station, and is applicable to the method provided in any one of Embodiment 1 to Embodiment 3. Referring to FIG. 6, the device includes a first transceiver module 401 and a first determining module 402.

The first transceiver module 401 is configured to receive a first RF signal sent by an FN. The first RF signal is obtained by the FN by combining RF signals returned through RF interfaces of the FN.

The first determining module 402 is configured to determine, according to the first RF signal, whether noise interference exists on one of the RF interfaces.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

### Embodiment 5

This embodiment of the present invention provides a return-channel noise monitoring device. The device may be installed in a hub station, and is applicable to the method provided in Embodiment 1, Embodiment 2, or Embodiment 3. The device includes a first transceiver module 501 and a first determining module 502. A difference between the device provided in this embodiment and the device provided in Embodiment 4 is as follows:

The first determining module 502 includes:
a judging unit 5021, configured to determine whether noise in the first RF signal exceeds a threshold;
a first determining unit 5022, configured to: when the noise in the first RF signal does not exceed the threshold, determine that the noise interference exists on none of the RF interfaces; and
a second determining unit 5023, configured to: when the noise in the first RF signal exceeds the threshold, determine that the noise interference exists on at least one of the RF interfaces.

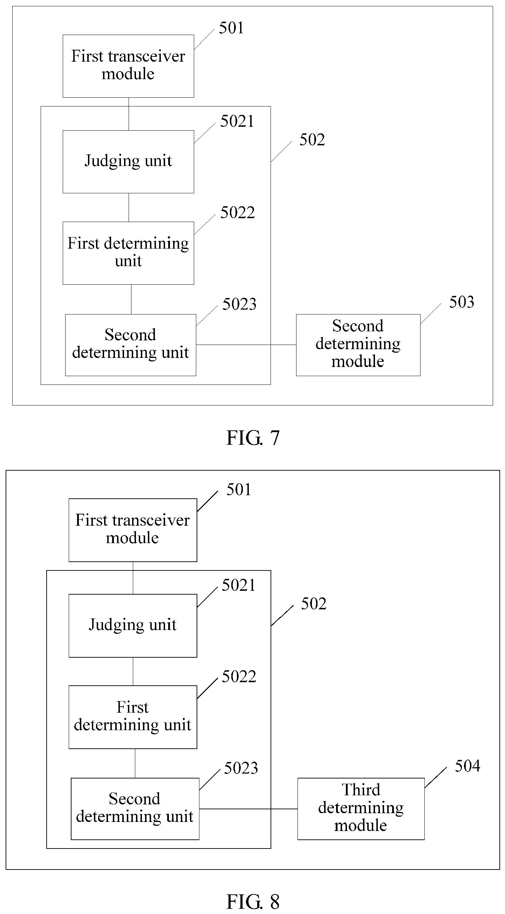

In a first implementation, referring to FIG. 7, the device further includes a second determining module 503. The second determining module 503 is configured to determine a frequency and/or a frequency band of the noise interference in the first RF signal when it is determined that the noise interference exists on at least one of the RF interfaces.

The first transceiver module 501 is further configured to receive a second digital signal sent by the FN. The second digital signal is sent by the FN after the FN receives a first digital signal sent by the hub station. The first digital signal is used to indicate the frequency and/or the frequency band of the noise interference. The second digital signal is obtained by the FN by means of conversion after the FN samples some of the RF signals returned through the RF interfaces. Frequencies and/or frequency bands of the some of the RF signals returned through the RF interfaces are the same as the frequency and/or the frequency band of the noise interference.

The second determining module 503 is further configured to: convert the second digital signal to obtain the some of the RF signals returned through the RF interfaces; and calculate noise in the some of the RF signals returned through the RF interfaces, to determine the RF interface on which the noise interference exists.

In a second implementation, referring to FIG. 8, the device further includes a third determining module 504.

The first transceiver module 501 is further configured to receive a second RF signal sent by the FN. The second RF signal is sent by the FN after the FN receives a third digital signal sent by the hub station. The third digital signal is used to instruct the FN to sample, in sequence and based on time periods, the RF signals returned through the RF interfaces. The second RF signal is obtained by the FN by sampling, in sequence and based on the time periods, the RF signals returned through the RF interfaces.

The third determining module 504 is configured to: restore, from the second RF signal, the RF signals returned through the RF interfaces; and calculate signal-to-noise ratios of the restored RF signals returned through the RF interfaces, to determine the RF interface on which the noise interference exists among the RF interfaces.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

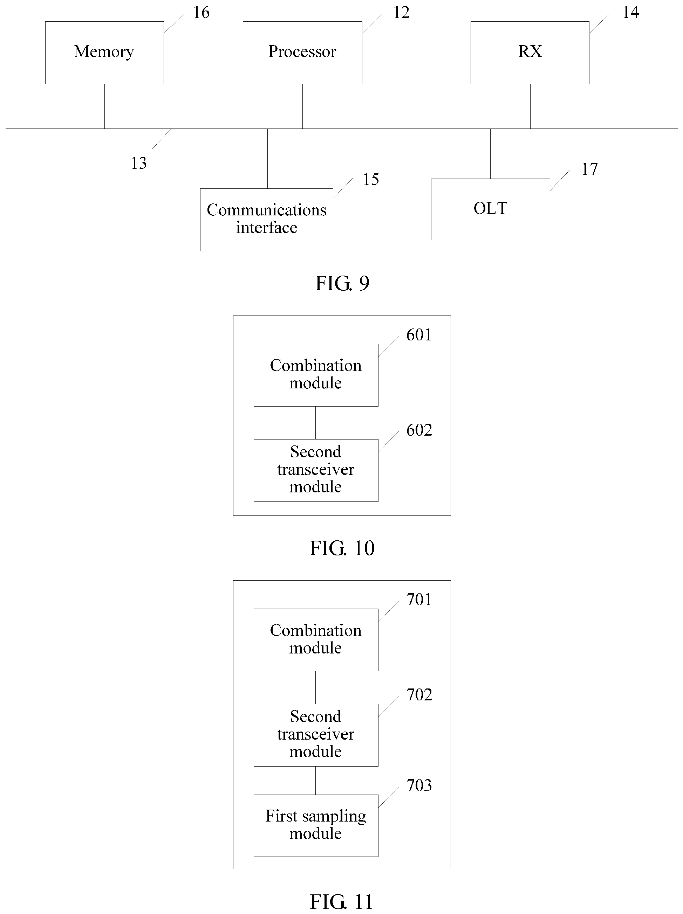

FIG. 9 shows a hardware structure of the device provided in Embodiment 4 or Embodiment 5. The device generally includes at least one processor 12 (for example, a CPU), an RX 14, an OLT 17, at least one network interface 15 or another communications interface, a memory 16, and at least one communications bus 13. A person skilled in the art may understand that the structure shown in FIG. 9 does not constitute a limitation on the device, and the device may include more or fewer components than those shown in the figure, or some components may be combined, or different component deployments may be used.

The components of the device are described in detail below with reference to FIG. 9.

The communications bus 13 is configured to implement connections and communication between the processor 12, the memory 16, the RX 14, the OLT 17, and the communications interface.

The at least one network interface 15 (which may be wired or wireless) may implement communication and a connection between the device and at least one other device (for example, a peripheral device) by using the Internet, a wide area network, a local network, a metropolitan area network, or the like.

The RX 14 and the OLT 17 may separately implement communication and a connection between the device and at least one other device (for example, an FN) by using a fiber. The RX 14 receives an optical signal into which an RF signal is modulated, and converts the received optical signal into the RF signal. The OLT 17 receives an optical signal obtained into which a digital signal is modulated, and converts the received optical signal into the digital signal. In addition, the OLT 17 may be connected to a fiber by using a splitter.

The memory 16 may be configured to store a software program and an application module. The processor 12 runs the software program and the application module that are stored in the memory 16, so as to execute various function applications of a computer 10 and perform data processing. The memory 16 may mainly include a program storage area and a data storage area. The program storage area may store an operating system, an application program required by at least one function (for example, a noise monitoring function), and the like. The data storage area may store data (for example, noise data) created according to use of the device, and the like. In addition, the memory 16 may include a high-speed RAM (Random Access Memory), and may further include a non-volatile memory, for example, at least one magnetic disk storage device, a flash memory device, or another volatile solid-state storage device.

The processor 12 is a control center of the computer 10, and is connected to various parts of the entire computer by using various interfaces and lines. By running or executing the software program and/or the application module stored in the memory 16, and invoking the data stored in the memory 16, the processor 12 performs various functions of the computer 10 and performs data processing, to implement overall monitoring on the computer.

Specifically, the RX 14 may receive a first RF signal sent by an FN. The first RF signal is obtained by the FN by combining RF signals returned through RF interfaces of the FN. By running or executing the software program and/or the application module stored in the memory 16, and invoking the data stored in the memory 16, the processor 12 may determine, according to the first RF signal, whether noise interference exists on one of the RF interfaces.

### Embodiment 6

This embodiment of the present invention provides a return-channel noise monitoring device. The device may be installed on an FN, and is applicable to the method provided in any one of Embodiment 1 to Embodiment 3. Referring to FIG. 10, the device includes a combination module 601 and a second transceiver module 602.

The combination module 601 is configured to combine RF signals returned through RF interfaces, to obtain a first RF signal.

The second transceiver module 602 is configured to send the first RF signal to a hub station.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

### Embodiment 7

This embodiment of the present invention provides a return-channel noise monitoring device. The device may be installed on an FN, and is applicable to the method provided in Embodiment 1, Embodiment 2, or Embodiment 3. The device includes a combination module 701 and a second transceiver module 702. A difference between the device provided in this embodiment and the device provided in Embodiment 6 is as follows:

Referring to FIG. 11, in a first implementation, the second transceiver module 702 is further configured to receive a first digital signal sent by a hub station. The first digital signal is used to indicate a frequency and/or a frequency band of noise interference.

The device further includes a first sampling module 703.

The first sampling module 703 is configured to: sample some of RF signals returned through RF interfaces and convert the sampled signals to obtain a second digital signal. Frequencies and/or frequency bands of the some of the RF signals returned through the RF interfaces are the same as the frequency and/or the frequency band of the noise interference.

The second transceiver module 702 is further configured to send the second digital signal to the hub station.

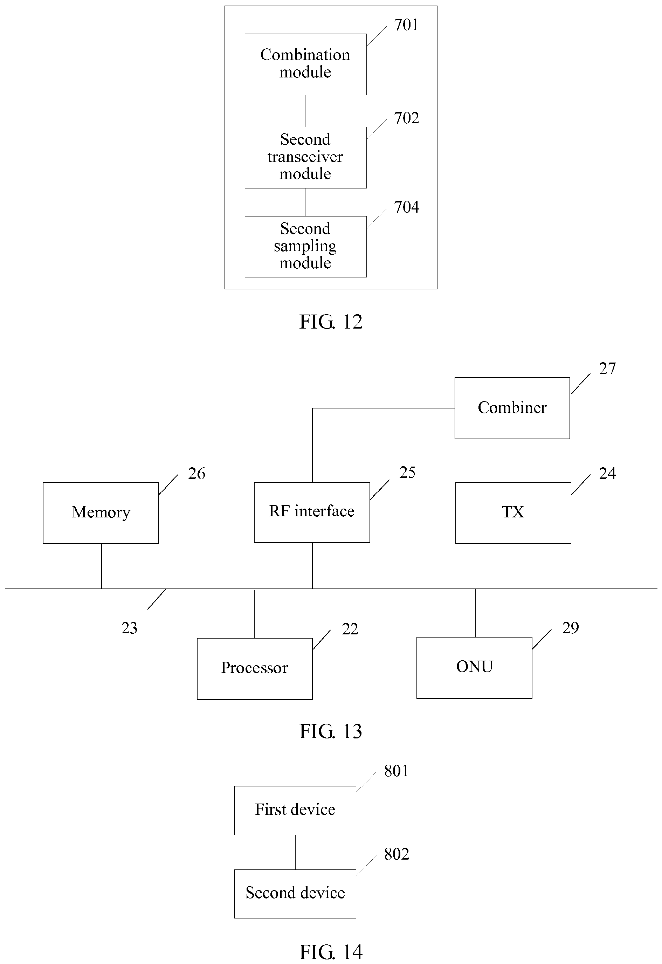

Referring to FIG. 12, in a second implementation, the second transceiver module 702 is further configured to receive a third digital signal sent by a hub station.

The device further includes a second sampling module 704. The second sampling module 704 is configured to: as instructed by the third digital signal, sample, in sequence and based on time periods, RF signals returned through RF interfaces of the FN, to obtain a second RF signal.

The second transceiver module 702 is further configured to send the second RF signal to the hub station.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

FIG. 13 shows a hardware structure of the device provided in Embodiment 6 or Embodiment 7. The device generally includes at least one processor 22 (for example, a CPU), a TX 24, a combiner 27, an ONU 29, at least one RF interface 25 or another communications interface, a memory 26, and at least one communications bus 23. A person skilled in the art may understand that the structure shown in FIG. 13 does not constitute a limitation on the device, and the device may include more or fewer components than those shown in the figure, or some components may be combined, or different component deployments may be used.

The components of the device are described in detail below with reference to FIG. 13.

The communications bus 23 is configured to implement connections and communication between the processor 22, the memory 26, the TX 24, the combiner 27, the ONU 29, and the communications interface.

The at least one RF interface 25 implements communication and a connection between the device and at least one other device (for example, a CM) by using a coaxial cable or the like.

The combiner 27 includes several input ports. Each input port is connected to one RF interface 25.

The TX 24 and the ONU 29 may separately implement communication and a connection between the device and at least one other device (for example, a hub station) by using a fiber. The TX 24 is connected to an output port of the combiner 27, to modulate an RF signal output by the combiner 27 into an optical signal and send the optical signal. The ONU 29 modulates a digital signal into an optical signal and sends the digital signal. The ONU 29 may communicate with another device by using a fiber.

The memory 26 may be configured to store a software program and an application module. The processor 22 runs the software program and the application module that are stored in the memory 26, so as to execute various function applications of a computer 20 and perform data processing (for example, opening or closing an analog switch 28). The memory 26 may mainly include a program storage area and a data storage area. The program storage area may store an operating system, an application program required by at least one function (for example, a noise monitoring function), and the like. The data storage area may store data (for example, noise data) created according to use of the device, and the like. In addition, the memory 26 may include a high-speed RAM (Random Access Memory), and may further include a non-volatile memory (non-volatile memory), for example, at least one magnetic disk storage device, a flash memory device, or another volatile solid-state storage device.

The processor 22 is a control center of the computer 20, and is connected to various parts of the entire computer by using various interfaces and lines. By running or executing the software program and/or the application module stored in the memory 26, and invoking the data stored in the memory 26, the processor 22 performs various functions of the computer 20 and performs data processing, to implement overall monitoring on the computer.

Specifically, by running or executing the software program and/or the application module stored in the memory 26, and invoking the data stored in the memory 26, the processor 22 may combine RF signals returned through RF interfaces, to obtain a first RF signal. The TX 24 may send the first RF signal to a hub station.

### Embodiment 8

This embodiment of the present invention provides a return-channel noise monitoring system. The system is applicable to the method provided in any one of Embodiment 1 to Embodiment 3. Referring to FIG. 14, the system includes a first device 801 and a second device 802.

The first device 801 is the device provided in Embodiment 4 or Embodiment 5, and the second device 802 is the device provided in Embodiment 6 or Embodiment 7.

In this embodiment of the present invention, a first RF signal sent by an FN is received, where the first RF signal is obtained by the FN by combining RF signals returned through RF interfaces of the FN; and whether noise interference exists on one of the RF interfaces is determined according to the first RF signal. When it is determined that the noise interference exists on none of the RF interfaces, that is, when none of the RF interfaces of the FN is interfered by noise, return-channel noise on the FN is monitored. Because the return-channel noise is monitored by using the first RF signal rather than a digital signal, a bandwidth requirement for a data channel is relatively low, so as to ensure that the FN can transfer, to a hub station, the RF signals returned through the RF interfaces.

In addition, the first RF signal is obtained by the FN by combining the RF signals returned through the RF interfaces. This means that the first RF signal is a single-channel signal. Therefore, the first RF signal can be transferred by using only one RF signal line, for example, a pair of a TX and an RX. In this way, networking is simplified and costs are reduced.

### Second set of return-channel noise monitoring method, device, and system

### Embodiment 9

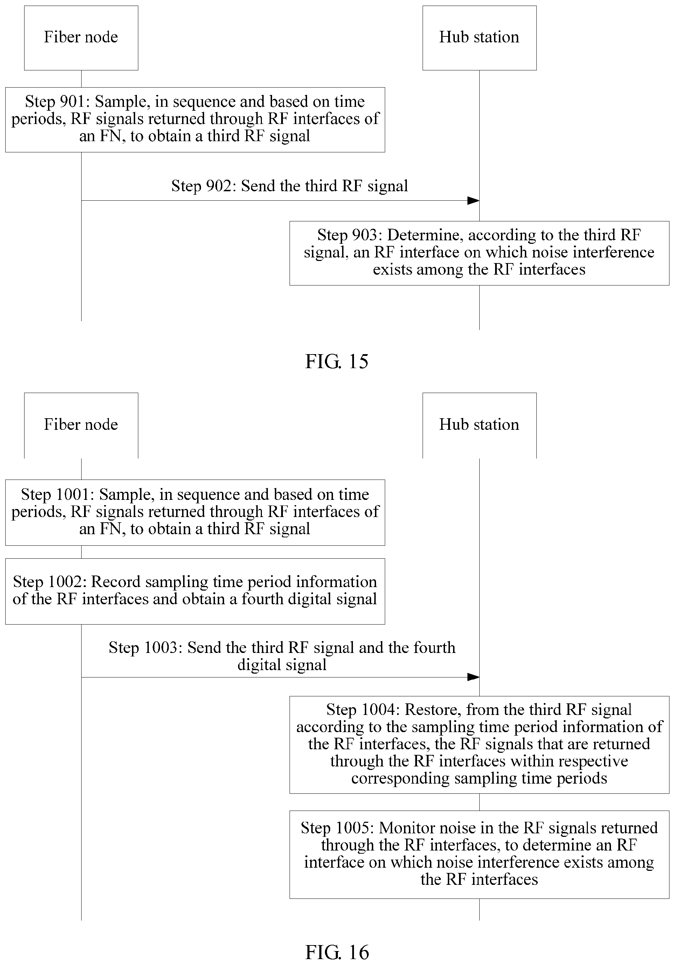

This embodiment of the present invention provides a return-channel noise monitoring method. Referring to FIG. 15, a process of the method includes the following steps.

Step 901: An FN samples, in sequence and based on time periods, RF signals returned through RF interfaces of the FN, to obtain a third RF signal.

The FN may be any FN in the HFC network shown in FIG. 2.

Step 902: The FN sends the third RF signal to a hub station.

The hub station may be a hub station that establishes a return channel to the FN.

During specific implementation, the FN may modulate the third RF signal into an optical signal, and send the optical signal to the hub station by using a TX. When the third RF signal is a single-channel signal, the FN may send the third RF signal by using one TX. When the third RF signal is a multichannel signal, one RF interface corresponds to one channel of signal. The FN may provide one TX to each RF interface, to send an RF signal returned through each RF interface.

The hub station receives the third RF signal sent by the FN.

During specific implementation, the hub station may receive, by using an RX, the optical signal into which the third RF signal is modulated and that is sent by the TX, and output the third RF signal. When the hub station supports more than one FN, the hub station may provide at least one RX to each FN.

Step 903: The hub station determines, according to the third RF signal, an RF interface on which noise interference exists among the RF interfaces.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

### Embodiment 10

This embodiment of the present invention provides a return-channel noise monitoring method. In this embodiment, how a hub station determines, according to a third RF signal, an RF interface on which noise interference exists among RF interfaces is described in detail. Referring to FIG. 16, a process of the method includes the following steps.

Step 1001: An FN samples, in sequence and based on time periods, RF signals returned through RF interfaces of the FN, to obtain a third RF signal.

For a process of sampling, by the FN in sequence and based on the time periods, the RF signals returned through the RF interfaces of the FN, refer to step 305 in Embodiment 3 of the present invention. Details are not described herein again.

Step 1002: The FN records sampling time period information of the RF interfaces and obtains a fourth digital signal.

When sampling an RF signal returned through an RF interface, the FN records sampling time period information of the RF interface. Sampling time period information of each RF interface indicates a location, in the third RF signal, of a sampled RF signal of the RF interface. Specifically, the sampling time period information includes a start time and an end time for sampling the RF signal returned through the RF interface. For example, sampling time period information of a first RF interface includes a start time and an end time for sampling an RF interface returned through the first RF interface.

Step 1003: The FN sends the third RF signal and the fourth digital signal to the hub station.

The hub station receives the third RF signal and the fourth digital signal that are sent by the FN.

During specific implementation, the FN may synchronously send a sampled signal to the hub station by using a TX when sampling an RF signal returned through an RF interface.

In this embodiment, the FN and the hub station may transmit a digital signal by using interconnection devices: an ONU and an OLT. Working principles of the ONU and the OLT are known to a person skilled in the art, and are not described herein.

Step 1004: The hub station restores, from the third RF signal according to the sampling time period information of the RF interfaces, the RF signals that are returned through the RF interfaces within respective corresponding sampling time periods.

After learning the location, in the third RF signal, of the sampled RF signal of each RF interface, the hub station may extract, from the third RF signal, the RF signals returned through the RF interfaces within the respective corresponding sampling time periods.

According to step 1003 and step 1004, the hub station restores, from the third RF signal, the RF signals returned through the RF interfaces.

Step 1005: The hub station monitors noise in the RF signals returned through the RF interfaces, to determine an RF interface on which noise interference exists among the RF interfaces.

The hub station may calculate signal-to-noise ratios of the RF signals returned through the RF interfaces, to determine whether noise interference exists on an RF interface. Assuming that a signal-to-noise ratio of an RF signal returned through an RF interface exceeds a preset threshold, it is determined that noise interference exists on the RF interface. When determining the RF interface on which the noise interference exists, the hub station may alarm. For example, the hub station transfers related information of the FN and the RF interface to a management platform. After finding the related information on the management platform, an operator may assign maintenance personnel to check an operating status of the FN on site. In addition, the hub station may further deliver a command to the FN by using the OLT and the ONU, to instruct the FN to sample an RF signal of an RF interface (for example, an RF interface on which noise interference exists) for a long time, and return the RF signal. In this way, the hub station may select an RF interface for long-term monitoring.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

### Embodiment 11

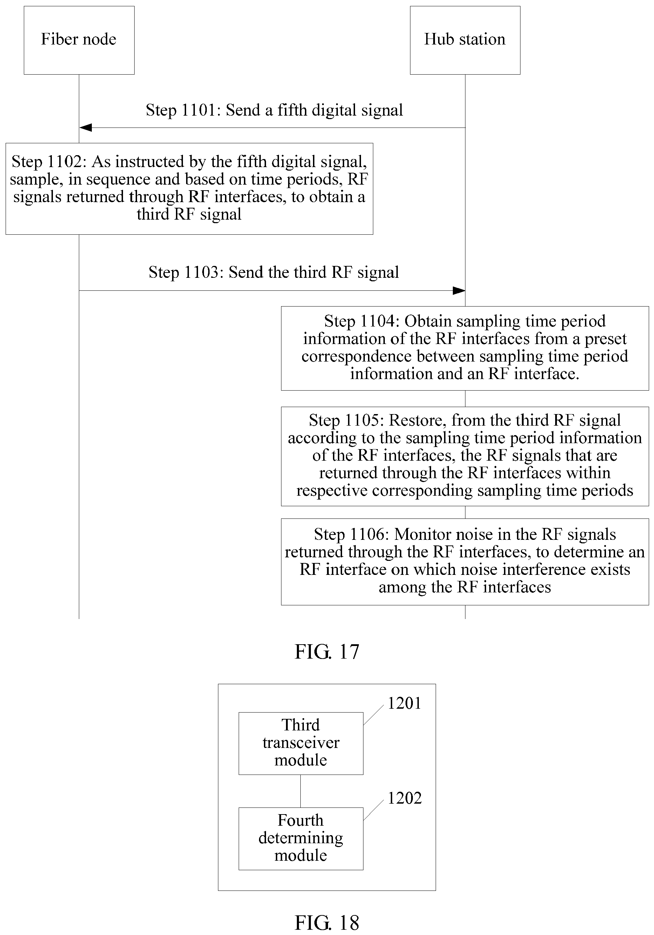

This embodiment of the present invention provides a return-channel noise monitoring method. In this embodiment, how a hub station determines, according to a third RF signal, an RF interface on which noise interference exists among RF interfaces is described in detail. Referring to FIG. 17, a process of the method includes the following steps.

Step 1101: The hub station sends a fifth digital signal to an FN.

The fifth digital signal is used to instruct the FN to sample, according to a preset correspondence between sampling time period information and an RF interface, RF signals returned through RF interfaces.

The FN receives the fifth digital signal sent by the hub station.

Step 1102: As instructed by the fifth digital signal, the FN samples, in sequence and based on time periods, RF signals returned through RF interfaces, to obtain a third RF signal.

Specifically, the FN samples, in sequence and based on the time periods, according to the preset correspondence between sampling time period information and an RF interface, the RF signals returned through the RF interfaces of the FN, to obtain the third RF signal.

A process of sampling the RF signals returned through the RF interfaces is the same as that in step 1001 in Embodiment 10. Details are not described herein again.

Step 1103: The FN sends the third RF signal to the hub station.

The hub station receives the third RF signal sent by the FN.

Step 1104: The hub station obtains sampling time period information of the RF interfaces from a preset correspondence between sampling time period information and an RF interface.

It should be noted that, in this embodiment, an order of performing step 1104 is not limited. Step 1104 may be performed at any time before step 1105.

Step 1105: The hub station restores, from the third RF signal according to the sampling time period information of the RF interfaces, the RF signals that are returned through the RF interfaces within respective corresponding sampling time periods.

Step 1105 is the same as step 1004 in Embodiment 10. Details are not described herein again.

It should be noted that when the FN performs sampling and synchronously transfers the RF signals returned through the RF interfaces, the hub station may synchronously restore, from the third RF signal according to the sampling time period information of the RF interfaces, the RF signals that are returned through the RF interfaces within the respective corresponding sampling time periods.

Compared with Embodiment 10, in this embodiment, the hub station does not need to wait for the FN to notify the sampling time period information of the RF interfaces, and can restore, after receiving the third RF signal, the RF signals that are returned through the RF interfaces within the respective corresponding sampling time periods, thereby improving processing efficiency and simplifying a monitoring process.

According to step 1103 to step 1105, the hub station restores, from the third RF signal, the RF signals returned through the RF interfaces.

Step 1106: The hub station monitors noise in the RF signals returned through the RF interfaces, to determine an RF interface on which noise interference exists among the RF interfaces.

Step 1106 is the same as step 1005 in Embodiment 10. Details are not described herein again.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

### Embodiment 12

This embodiment of the present invention provides a return-channel noise monitoring device. The device may be installed in a hub station, and is applicable to the method provided in any one of Embodiment 9, Embodiment 10, or Embodiment 11. Referring to FIG. 18, the device includes a third transceiver module 1201 and a fourth determining module 1202.

The third transceiver module 1201 is configured to receive a third RF signal sent by an FN. The third RF signal is obtained by the FN by sampling, in sequence and based on time periods, RF signals returned through RF interfaces of the FN.

The fourth determining module 1202 is configured to determine, according to the third RF signal, an RF interface on which noise interference exists among the RF interfaces.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

### Embodiment 13

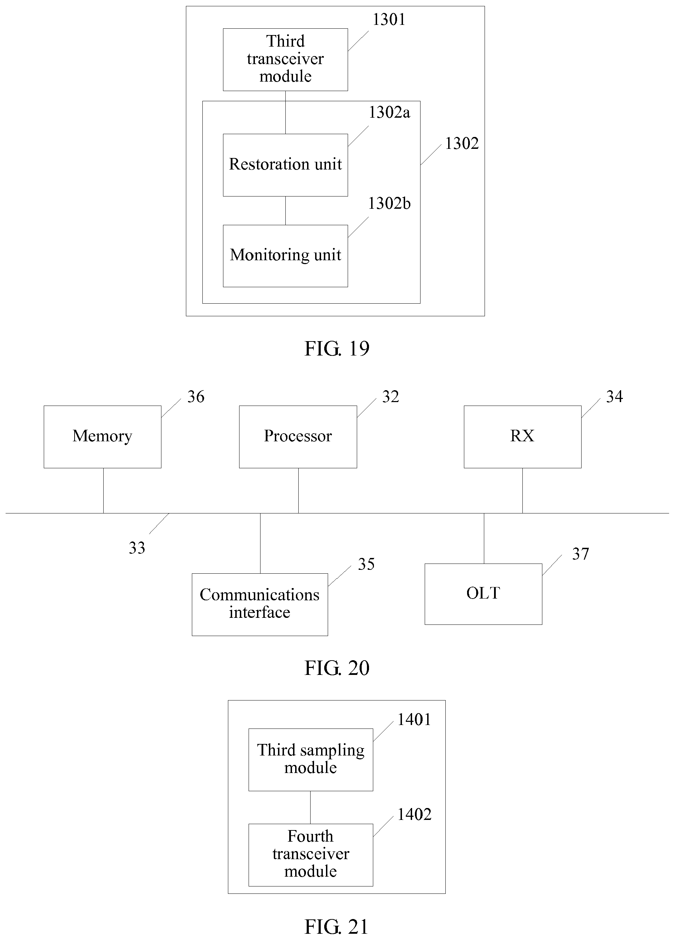

This embodiment of the present invention provides a return-channel noise monitoring device. The device may be installed in a hub station, and is applicable to the method provided in Embodiment 9, Embodiment 10, or Embodiment 11. Referring to FIG. 19, the device includes a third transceiver module 1301 and a fourth determining module 1302. A difference between the device provided in this embodiment and the device provided in Embodiment 12 is as follows:

The fourth determining module 1302 includes:
a restoration unit 1302a, configured to restore, from a third RF signal, RF signals returned through RF interfaces; and
a monitoring unit 1302b, configured to monitor noise in the RF signals returned through the RF interfaces, to determine an RF interface on which noise interference exists among the RF interfaces.

In a first implementation, the third transceiver module 1301 is further configured to receive a fourth digital signal sent by an FN. The fourth digital signal includes sampling time period information of the RF interfaces.

The restoration unit 1302a is configured to restore, from the third RF signal according to the sampling time period information of the RF interfaces, the RF signals that are returned through the RF interfaces within respective corresponding sampling time periods.

In a second implementation, the restoration unit 1302a is configured to: obtain sampling time period information of the RF interfaces from a preset correspondence between sampling time period information and an RF interface; and restore, from the third RF signal according to the sampling time period information of the RF interfaces, the RF signals that are returned through the RF interfaces within respective corresponding sampling time periods.

The third transceiver module 1301 is further configured to send a fifth digital signal to an FN. The fifth digital signal is used to instruct the FN to sample, according to the preset correspondence between sampling time period information and an RF interface, the RF signals returned through the RF interfaces.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

FIG. 20 shows a hardware structure of the device provided in Embodiment 12 or Embodiment 13. The device generally includes at least one processor 32 (for example, a CPU), an RX 34, an OLT 37, at least one network interface 35 or another communications interface, a memory 36, and at least one communications bus 33. A person skilled in the art may understand that the structure shown in FIG. 20 does not constitute a limitation on the device, and the device may include more or fewer components than those shown in the figure, or some components may be combined, or different component deployments may be used.

The components of the device are described in detail below with reference to FIG. 20.

The communications bus 33 is configured to implement connections and communication between the processor 32, the memory 36, the RX 34, the OLT 37, and the communications interface.

The at least one network interface 35 (which may be wired or wireless) may implement communication and a connection between the device and at least one other device (for example, a peripheral device) by using the Internet, a wide area network, a local network, a metropolitan area network, or the like.

The RX 34 and the OLT 37 may separately implement communication and a connection between the device and at least one other device (for example, an FN) by using a fiber. The RX 34 receives an optical signal into which an RF signal is modulated, and converts the received optical signal into an RF signal. The OLT 37 receives an optical signal into which a digital signal is modulated, and converts the received optical signal into a digital signal. In addition, the OLT 37 may be connected to a fiber by using a splitter.

The memory 36 may be configured to store a software program and an application module. The processor 32 runs the software program and the application module that are stored in the memory 36, so as to execute various function applications of a computer 30 and perform data processing. The memory 36 may mainly include a program storage area and a data storage area. The program storage area may store an operating system, an application program required by at least one function (for example, a noise monitoring function), and the like. The data storage area may store data (for example, noise data) created according to use of the device, and the like. In addition, the memory 36 may include a high-speed RAM (Random Access Memory), and may further include a non-volatile memory (non-volatile memory), for example, at least one magnetic disk storage device, a flash memory device, or another volatile solid-state storage device.

The processor 32 is a control center of the computer 30, and is connected to various parts of the entire computer by using various interfaces and lines. By running or executing the software program and/or the application module stored in the memory 36, and invoking the data stored in the memory 36, the processor 32 performs various functions of the computer 30 and performs data processing, to implement overall monitoring on the computer.

Specifically, the RX 34 may receive a third RF signal sent by an FN. The third RF signal is obtained by the FN by sampling, in sequence and based on time periods, RF signals returned through RF interfaces of the FN. By running or executing the software program and/or the application module stored in the memory 36, and invoking the data stored in the memory 36, the processor 32 may determine, according to the third RF signal, an RF interface on which noise interference exists among the RF interfaces.

### Embodiment 14

This embodiment of the present invention provides a return-channel noise monitoring device. The device may be installed on an FN, and is applicable to the method provided in any one of Embodiment 9, Embodiment 10, or Embodiment 11. Referring to FIG. 21, the device includes a third sampling module 1401 and a fourth transceiver module 1402.

The third sampling module 1401 is configured to sample, in sequence and based on time periods, RF signals returned through RF interfaces of the FN, to obtain a third RF signal.

The fourth transceiver module 1402 is configured to send the third RF signal to a hub station.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

### Embodiment 15

This embodiment of the present invention provides a return-channel noise monitoring device. The device may be installed on an FN, and is applicable to the method provided in Embodiment 9, Embodiment 10, or Embodiment 11. The device includes a third sampling module 1501 and a fourth transceiver module 1502. A difference between the device provided in this embodiment and the device provided in Embodiment 14 is as follows:

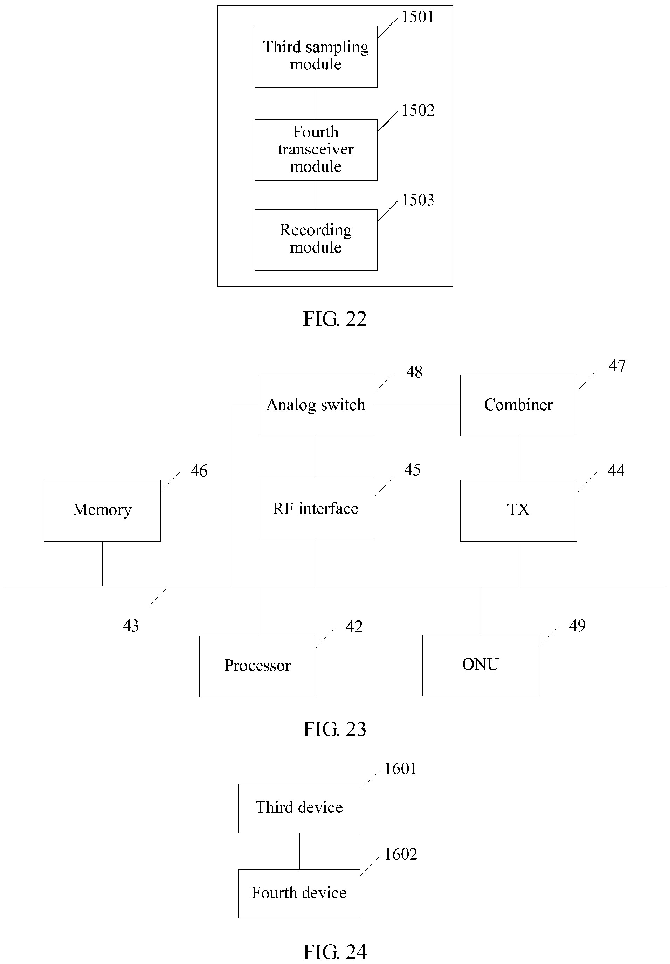

Referring to FIG. 22, in a first implementation, the device further includes a recording module 1503.

The recording module 1503 is configured to: record sampling time period information of RF interfaces and obtain a fourth digital signal.

The fourth transceiver module 1502 is further configured to send the fourth digital signal to a hub station.

In a second implementation, the fourth transceiver module 1502 is further configured to receive a fifth digital signal sent by a hub station.

The third sampling module 1501 is configured to: as instructed by the fifth digital signal, sample, in sequence and based on time periods, according to a preset correspondence between sampling time period information and an RF interface, RF signals returned through RF interfaces.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

In addition, the third RF signal is obtained by the FN by sampling, in sequence and based on time periods, the RF signals returned through the RF interfaces of the FN. This means that the third RF signal is a single-channel signal obtained by splicing the sampled signals of the RF interfaces. Therefore, the third RF signal can be transferred by using only a pair of a TX and an RX. In this way, networking is simplified and costs are reduced.

FIG. 23 shows a hardware structure of the device provided in Embodiment 14 or Embodiment 15. The device generally includes at least one processor 42 (for example, a CPU), a TX 44, a combiner 47, an analog switch 48, an ONU 49, at least one RF interface 45 or another communications interface, a memory 46, and at least one communications bus 43. A person skilled in the art may understand that the structure shown in FIG. 23 does not constitute a limitation on the device, and the device may include more or fewer components than those shown in the figure, or some components may be combined, or different component deployments may be used.

The components of the device are described in detail below with reference to FIG. 23.

The communications bus 43 is configured to implement connections and communication between the processor 42, the memory 46, the TX 44, the combiner 47, the analog switch 48, the ONU 49, and the communications interface.

The at least one RF interface 45 implements communication and a connection between the device and at least one other device (for example, a CM) by using a coaxial cable or the like.

The combiner 47 includes several input ports. Each input port is connected to one RF interface 45. One analog switch 48 is disposed between each input port and a connected RF interface 45. The analog switch 48 controls whether to transfer, to the combiner 47, an RF signal returned through the RF interface 45. When all analog switches 48 are in a closed state, the combiner 47 outputs a combined signal obtained after RF signals returned through all RF interfaces 45 are combined. When only one analog switch 48 is in a closed state and remaining analog switches 48 are in an open state, the combiner 47 only outputs an RF signal returned through an RF interface 45 connected to the analog switch 48 in a closed state.

The TX 44 and the ONU 49 may separately implement communication and a connection between the device and at least one other device (for example, a hub station) by using a fiber. The TX 44 is connected to an output port of the combiner 47, to modulate an RF signal output by the combiner 47 into an optical signal and send the optical signal. The ONU 49 modulates a digital signal into an optical signal and sends the digital signal. The ONU 49 may communicate with another device by using a fiber.

The memory 46 may be configured to store a software program and an application module. The processor 42 runs the software program and the application module that are stored in the memory 46, so as to execute various function applications of a computer 40 and perform data processing (for example, opening or closing an analog switch 48). The memory 46 may mainly include a program storage area and a data storage area. The program storage area may store an operating system, an application program required by at least one function (for example, a noise monitoring function), and the like. The data storage area may store data (for example, noise data) created according to use of the device, and the like. In addition, the memory 46 may include a high-speed RAM (Random Access Memory), and may further include a non-volatile memory (non-volatile memory), for example, at least one magnetic disk storage device, a flash memory device, or another volatile solid-state storage device.

The processor 42 is a control center of the computer 40, and is connected to various parts of the entire computer by using various interfaces and lines. By running or executing the software program and/or the application module stored in the memory 46, and invoking the data stored in the memory 46, the processor 42 performs various functions of the computer 40 and performs data processing, to implement overall monitoring on the computer.

Specifically, by running or executing the software program and/or the application module stored in the memory 46, and invoking the data stored in the memory 46, the processor 42 may sample, in sequence and based on time periods, RF signals returned through RF interfaces of an FN, to obtain a third RF signal. The TX 24 may send the third RF signal to a hub station.

### Embodiment 16

This embodiment of the present invention provides a return-channel noise monitoring system. The system is applicable to the method provided in any one of Embodiment 9 to Embodiment 11. Referring to FIG. 24, the system includes a third device 1601 and a fourth device 1602.

The third device 1601 is the device provided in Embodiment 12 or Embodiment 13, and the fourth device 1602 is the device provided in Embodiment 14 or Embodiment 15.

In this embodiment of the present invention, a third RF signal sent by an FN is received, where the third RF signal includes RF signals returned through RF interfaces of the FN; and an RF interface on which noise interference exists among the RF interfaces is determined according to the third RF signal. Because the return-channel noise is monitored by using the third RF signal rather than a digital signal, a bandwidth requirement for a data channel is relatively low, so as to ensure that the FN can transfer, to a hub station, the RF signals returned through the RF interfaces.

It should be noted that, when the return-channel noise monitoring device provided in the embodiments monitors return-channel noise, division of the foregoing function modules is only used as an example for description. During actual application, the foregoing functions can be allocated to different function modules and implemented according to a requirement, that is, the internal structure of the device is divided into different function modules to implement all or some of the functions described above. In addition, the return-channel noise monitoring device and the return-channel noise monitoring method provided in the embodiments belong to the same conception. For a specific implementation process, refer to the method embodiments. Details are not described herein again.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely example embodiments of the present invention, but are not intended to limit the present invention. The scope of the present invention is defined by the appended claims.

## Claims

1. A return-channel noise monitoring method, wherein the method comprises:
a) receiving (202), by a hub station (01), an optical signal modulated by a first radio frequency RF signal sent by a fiber node FN (02), wherein the first RF signal is obtained by means of a combiner (27, 47) at the FN with several input ports connected to a plurality of RF interfaces (02a) respectively and adapted to combine (101, 201) RF signals returned through RF interfaces (02a) of the FN; and
b) determining (103), according to the first RF signal, whether noise interference exists on one of the RF interfaces; and
c) wherein the determining (103), according to the first RF signal, whether noise interference exists on one of the RF interfaces comprises:
c1) determining (203) whether noise in the first RF signal exceeds a threshold; and
c2) when the noise in the first RF signal does not exceed the threshold, determining (203) that the noise interference exists on none of the RF interfaces; or
c3) when the noise in the first RF signal exceeds the threshold, determining (203) that the noise interference exists on at least one of the RF interfaces; and
d) wherein after the determining that the noise interference exists on at least one of the RF interfaces, the method further comprises:
d1) determining (204) a frequency and/or a frequency band of the noise interference in the first RF signal;
d2) receiving (207) a second digital signal sent by the FN, wherein the second digital signal is sent by the FN after the FN receives (205) a first digital signal sent by the hub station, the first digital signal is used to indicate the frequency and/or the frequency band of the noise interference, the second digital signal is obtained by the FN by means of conversion after the FN samples some of the RF signals returned through the RF interfaces, and frequencies and/or frequency bands of the some of the RF signals returned through the RF interfaces are the same as the frequency and/or the frequency band of the noise interference;
d3) converting (208) the second digital signal to obtain the some of the RF signals returned through the RF interfaces; and
d4) calculating (209) noise in the some of the RF signals returned through the RF interfaces, to determine the RF interface on which the noise interference exists.

2. The method according to claim 1, wherein after the determining that the noise interference exists on at least one of the RF interfaces, the method further comprises:
receiving (306) a second RF signal sent by the FN, wherein the second RF signal is sent by the FN after the FN receives (304) a third digital signal sent by the hub station, the third digital signal is used to instruct the FN to sample (305), in sequence and based on time periods, the RF signals returned through the RF interfaces, and the second RF signal is obtained by the FN by sampling (305), in sequence and based on the time periods, the RF signals returned through the RF interfaces;
restoring (307), from the second RF signal, the RF signals returned through the RF interfaces; and
calculating (308) signal-to-noise ratios of the restored RF signals returned through the RF interfaces, to determine the RF interface on which the noise interference exists.

3. A return-channel noise monitoring method, wherein the method comprises:
a) combining (101, 201), by means of a combiner (27, 47) at a fiber node FN with several input ports connected to a plurality of RF interfaces (02a) respectively, radio frequency RF signals returned through RF interfaces of the FN, to obtain a first RF signal; and
b) sending (102, 202) the first RF signal to a hub station; wherein
c) after the sending the first RF signal to a hub station, the method further comprises:
c1) receiving (S205) a first digital signal sent by the hub station, wherein the first digital signal is used to indicate a frequency and/or a frequency band of noise interference;
c2) sampling (206) some of the RF signals returned through the RF interfaces and converting the sampled signals to obtain a second digital signal, wherein frequencies and/or frequency bands of the some of the RF signals returned through the RF interfaces are the same as the frequency and/or the frequency band of the noise interference; and
c3) sending (207) the second digital signal to the hub station.

4. The method according to claim 3, wherein after the sending the first RF signal to a hub station, the method further comprises:
receiving (304) a third digital signal sent by the hub station;
as instructed by the third digital signal, sampling (305), in sequence and based on time periods, the RF signals returned through the RF interfaces, to obtain a second RF signal; and
sending (306) the second RF signal to the hub station.

5. A return-channel noise monitoring device, wherein the device comprises:
a) a first transceiver module (401), configured to receive an optical signal modulated by a first radio frequency RF signal sent by a fiber node FN, wherein the first RF signal is obtained by means of a combiner (27, 47) at the FN with several input ports connected to a plurality of RF interfaces (02a) respectively and adapted to combine RF signals returned through RF interfaces of the FN; and
b) a first determining module (402), configured to determine, according to the first RF signal, whether noise interference exists on one of the RF interfaces; wherein the first determining module (402) comprises:
b1) a judging unit (5021), configured to determine whether noise in the first RF signal exceeds a threshold;
b2) a first determining unit (5022), configured to: when the noise in the first RF signal does not exceed the threshold, determine that the noise interference exists on none of the RF interfaces; and
b3) a second determining unit (5023), configured to: when the noise in the first RF signal exceeds the threshold, determine that the noise interference exists on at least one of the RF interfaces;
c) wherein the device further comprises a second determining module (503), wherein
c1) the second determining module (503) is configured to determine (204) a frequency and/or a frequency band of the noise interference in the first RF signal when it is determined that the noise interference exists on at least one of the RF interfaces;
c2) the first transceiver module (401) is further configured to receive (207) a second digital signal sent by the FN, wherein the second digital signal is sent by the FN after the FN receives a first digital signal sent by the hub station, the first digital signal is used to indicate the frequency and/or the frequency band of the noise interference, the second digital signal is obtained by the FN by means of conversion after the FN samples some of the RF signals returned through the RF interfaces, and frequencies and/or frequency bands of the some of the RF signals returned through the RF interfaces are the same as the frequency and/or the frequency band of the noise interference; and
c3) the second determining module (503) is further configured to: convert (208) the second digital signal to obtain the some of the RF signals returned through the RF interfaces; and calculate (209) noise in the some of the RF signals returned through the RF interfaces, to determine the RF interface on which the noise interference exists.

6. The device according to claim 5, wherein the device further comprises a third determining module (504), wherein
the first transceiver module (501) is further configured to receive a second RF signal sent by the FN, wherein the second RF signal is sent by the FN after the FN receives a third digital signal sent by the hub station, the third digital signal is used to instruct the FN to sample, in sequence and based on time periods, the RF signals returned through the RF interfaces, and the second RF signal is obtained by the FN by sampling, in sequence and based on the time periods, the RF signals returned through the RF interfaces; and
the third determining module (504) is configured to: restore, from the second RF signal, the RF signals returned through the RF interfaces; and calculate signal-to-noise ratios of the restored RF signals returned through the RF interfaces, to determine the RF interface on which the noise interference exists.

7. A return-channel noise monitoring device, wherein the device comprises:
a) a combination module (601, 701) including a combiner (27, 47) with several input ports connected to a plurality of RF interfaces (02a) respectively and configured to combine radio frequency RF signals returned through RF interfaces, to obtain a first RF signal; and
b) a second transceiver module (602, 702), configured to send the first RF signal to a hub station ; wherein
b1) the second transceiver module (602, 702) is further configured to receive (205) a first digital signal sent by the hub station, wherein the first digital signal is used to indicate (204) a frequency and/or a frequency band of noise interference;
b2) the device further comprises a first sampling module (703), wherein
b3) the first sampling module (703) is configured to: sample (206) some of the RF signals returned through the RF interfaces and convert (206) the sampled signals to obtain a second digital signal, wherein frequencies and/or frequency bands of the some of the RF signals returned through the RF interfaces are the same as the frequency and/or the frequency band of the noise interference; and
b4) the second transceiver module (602, 702) is further configured to send (207) the second digital signal to the hub station.

8. The device according to claim 7, wherein
the second transceiver module (702), is further configured to receive a third digital signal sent by the hub station (01);
the device further comprises a second sampling module (704), wherein
the second sampling module (704) is configured to: as instructed by the third digital signal, sample, in sequence and based on time periods, the RF signals returned through the RF interfaces, to obtain a second RF signal; and
the second transceiver module (704) is further configured to send the second RF signal to the hub station.

9. A return-channel noise monitoring system, wherein the system comprises a first device and a second device, wherein
the first device is the device according to any one of claims 5 or 6, and the second device is the device according to any one of claims 7 or 8.

## Patentansprüche

1. Rückweg-Rauschüberwachungsverfahren, wobei das Verfahren umfasst:
a) Empfangen (202) eines optischen Signals durch eine Hub-Station (01), moduliert durch ein erstes, von einem Faserknoten FN (02) gesendetes Hochfrequenz-RF-Signal, wobei das erste RF-Signal mittels eines Combiners (27, 47) am FN erhalten wird, mit mehreren Eingangsanschlüssen, die mit einer entsprechenden Mehrzahl von RF-Schnittstellen (02a) verbunden sind, eingerichtet zum Zusammenführen (101, 201) von durch RF-Schnittstellen (02a) des FN zurückgeleiteten RF-Signalen; und
b) Ermitteln (103) anhand des ersten RF-Signals, ob an einer der RF-Schnittstellen Rauschinterferenz vorliegt; und
c) wobei das Ermitteln (103) anhand des ersten RF-Signals, ob an einer der RF-Schnittstellen Rauschinterferenz vorliegt, umfasst:
c1) Festlegen (203), ob das Rauschen im ersten RF-Signal einen Schwellenwert überschreitet; und,
c2) wenn das Rauschen im ersten RF-Signal den Schwellenwert nicht überschreitet, Festlegen (203), dass die Rauschinterferenz an keiner der RF-Schnittstellen vorliegt; oder,
c3) wenn das Rauschen im ersten RF-Signal den Schwellenwert überschreitet, Festlegen (203), dass die Rauschinterferenz an mindestens einer der RF-Schnittstellen vorliegt; und
d) wobei das Verfahren nach der Festlegung, dass die Rauschinterferenz an mindestens einer der RF-Schnittstellen vorliegt, ferner umfasst:
d1) Bestimmen (204) einer Frequenz und/oder eines Frequenzbands der Rauschinterferenz im ersten RF-Signal;
d2) Empfangen (207) eines zweiten, vom FN gesendeten digitalen Signals, wobei das zweite digitale Signal vom FN gesendet wird, nachdem der FN ein erstes, von der Hub-Station gesendetes digitales Signal empfangen hat (205), das erste digitale Signal verwendet wird, um die Frequenz und/oder das Frequenzband der Rauschinterferenz anzugeben, das zweite digitale Signal vom FN mittels Umwandlung erhalten wird, nachdem der FN einige der durch die RF-Schnittstellen zurückgeleiteten RF-Signale abgetastet hat und Frequenzen und/oder Frequenzbänder der einigen der durch die RF-Schnittstellen zurückgeleiteten RF-Signale gleich der Frequenz und/oder dem Frequenzband der Rauschinterferenz sind;
d3) Umwandeln (208) des zweiten digitalen Signals zum Erhalten der einigen der durch die RF-Schnittstellen zurückgeleiteten RF-Signale; und
d4) Berechnen (209) des Rauschens in den einigen der durch die RF-Schnittstellen zurückgeleiteten RF-Signale, um die RF-Schnittstelle zu ermitteln, an der die Rauschinterferenz vorliegt.

2. Verfahren nach Anspruch 1, wobei das Verfahren nach der Festlegung, dass die Rauschinterferenz an mindestens einer der RF-Schnittstellen vorliegt, ferner umfasst:
Empfangen (306) eines zweiten vom FN gesendeten RF-Signals, wobei das zweite RF-Signal durch den FN gesendet wird, nachdem der FN ein drittes, von der Hub-Station gesendetes digitales Signal empfangen hat (304), das dritte digitale Signal verwendet wird, um den FN anzuweisen, nacheinander und basierend auf Zeiträumen die durch die RF-Schnittstellen zurückgeleiteten RF-Signale abzutasten (305), und das zweite RF-Signal vom FN erhalten wird durch Abtasten (305), nacheinander und basierend auf Zeiträumen, der durch die RF-Schnittstellen zurückgeleiteten RF-Signale;
Wiederherstellen (307) der durch die RF-Schnittstellen zurückgeleiteten RF-Signale aus dem zweiten RF-Signal; und
Berechnen (308) von Signal-Rausch-Verhältnissen der durch die RF-Schnittstellen zurückgeleiteten wiederhergestellten RF-Signale, um die RF-Schnittstelle zu ermitteln, an der die Rauschinterferenz vorliegt.

3. Rückweg-Rauschüberwachungsverfahren, wobei das Verfahren umfasst:
a) Zusammenführen (101, 201) mittels eines Combiners (27, 47) an einem Faserknoten FN mit mehreren Eingangsanschlüssen, verbunden mit einer entsprechenden Mehrzahl von RF-Schnittstellen (02a), von durch RF-Schnittstellen des FN zurückgeleiteten Hochfrequenz-RF-Signalen, um ein erstes RF-Signal zu erhalten; und
b) Senden (102, 202) des ersten RF-Signals zu einer Hub-Station, wobei
c) das Verfahren nach dem Senden des ersten RF-Signals zu einer Hub-Station ferner umfasst:
c1) Empfangen (S205) eines ersten, von der Hub-Station gesendeten digitalen Signals, wobei das erste digitale Signal verwendet wird, um eine Frequenz und/oder ein Frequenzband von Rauschinterferenz anzugeben;
c2) Abtasten (206) von einigen der durch die RF-Schnittstellen zurückgeleiteten RF-Signale und Umwandeln der abgetasteten Signale, um ein zweites digitales Signal zu erhalten, wobei Frequenzen und/oder Frequenzbänder der einigen der durch die RF-Schnittstellen zurückgeleiteten RF-Signale gleich der Frequenz und/oder dem Frequenzband der Rauschinterferenz sind; und
c3) Senden (207) des zweiten digitalen Signals zur Hub-Station.

4. Verfahren nach Anspruch 3, wobei das Verfahren nach dem Senden des ersten RF-Signals zu einer Hub-Station ferner umfasst:
Empfangen (304) eines dritten, von der Hub-Station gesendeten digitalen Signals;
entsprechend der Anweisung durch das dritte digitale Signal, Abtasten (305) der durch die RF-Schnittstellen zurückgeleiteten RF-Signale nacheinander und basierend auf Zeiträumen, um ein zweites RF-Signal zu erhalten; und
Senden (306) des zweiten RF-Signals zur Hub-Station.

5. Rückweg-Rauschüberwachungseinrichtung, wobei die Einrichtung umfasst:
a) ein erstes Sendeempfängermodul (401), ausgelegt zum Empfangen eines optischen Signals, moduliert durch ein von einem Faserknoten FN gesendetes erstes Hochfrequenz-RF-Signal, wobei das erste RF-Signal mittels eines Combiners (27, 47) am FN erhalten wird, mit mehreren, mit einer entsprechenden Mehrzahl von RF-Schnittstellen (02a) verbundenen Eingangsanschlüssen, eingerichtet zum Zusammenführen von durch RF-Schnittstellen des FN zurückgeleiteten RF-Signalen; und
b) ein erstes Bestimmungsmodul (402), ausgelegt zum Ermitteln anhand des ersten RF-Signals, ob an einer der RF-Schnittstellen Rauschinterferenz vorliegt; wobei das erste Bestimmungsmodul (402) umfasst:
b1) eine erste Beurteilungseinheit (5021), ausgelegt zum Ermitteln, ob das Rauschen im ersten RF-Signal einen Schwellenwert überschreitet;
b2) eine erste Bestimmungseinheit (5022), dafür ausgelegt, wenn das Rauschen im ersten RF-Signal den Schwellenwert nicht überschreitet, festzulegen, dass die Rauschinterferenz an keiner der RF-Schnittstellen vorliegt; und
b3) eine zweite Bestimmungseinheit (5023), dafür ausgelegt, wenn das Rauschen im ersten RF-Signal den Schwellenwert überschreitet, festzulegen, dass die Rauschinterferenz an mindestens einer der RF-Schnittstellen vorliegt;
c) wobei die Einrichtung ferner ein zweites Bestimmungsmodul (503) umfasst, wobei
c1) das zweite Bestimmungsmodul (503) ausgelegt ist zum Bestimmen (204) einer Frequenz und/oder eines Frequenzbands der Rauschinterferenz im ersten RF-Signal, wenn ermittelt wird, dass die Rauschinterferenz an mindestens einer der RF-Schnittstellen vorliegt;
c2) das erste Sendeempfängermodul (401) ferner ausgelegt ist zum Empfangen (207) eines zweiten, durch den FN gesendeten digitalen Signals, wobei das zweite digitale Signal vom FN gesendet wird, nachdem der FN ein erstes, von der Hub-Station gesendetes digitales Signal empfangen hat, das erste digitale Signal verwendet wird zum Angeben der Frequenz und/oder des Frequenzbands der Rauschinterferenz, das zweite digitale Signal durch den FN mittels Umwandlung erhalten wird, nachdem der FN einige der durch die RF-Schnittstellen zurückgeleiteten RF-Signale abgetastet hat, und Frequenzen und/oder Frequenzbänder der einigen der durch die RF-Schnittstellen zurückgeleiteten RF-Signale gleich der Frequenz und/oder dem Frequenzband der Rauschinterferenz sind; und
c3) das zweite Bestimmungsmodul (503) ferner ausgelegt ist zum Umwandeln (208) des zweiten digitalen Signals, um die einigen der durch die RF-Schnittstellen zurückgeleiteten RF-Signale zu erhalten; und zum Berechnen (209) von Rauschen in den einigen der durch die RF-Schnittstellen zurückgeleiteten RF-Signalen, um die RF-Schnittstelle zu ermitteln, an der die Rauschinterferenz vorliegt.

6. Einrichtung nach Anspruch 5, wobei die Einrichtung ferner ein drittes Bestimmungsmodul (504) umfasst, wobei
das erste Sendeempfängermodul (501) ferner ausgelegt ist zum Empfangen eines zweiten, durch den FN gesendeten RF-Signals, wobei das zweite RF-Signal vom FN gesendet wird, nachdem der FN ein drittes, von der Hub-Station gesendetes digitales Signal empfangen hat, das dritte digitale Signal verwendet wird, um den FN anzuweisen, nacheinander und basierend auf Zeiträumen die durch die RF-Schnittstellen zurückgeleiteten RF-Signale abzutasten, und das zweite RF-Signal vom FN erhalten wird durch Abtasten, nacheinander und basierend auf Zeiträumen, der durch die RF-Schnittstellen zurückgeleiteten RF-Signale; und
das dritte Bestimmungsmodul (504) ausgelegt ist zum Wiederherstellen der durch die RF-Schnittstellen zurückgeleiteten RF-Signale aus dem zweiten RF-Signal und zum Berechnen von Signal-Rausch-Verhältnissen der wiederhergestellten, durch die RF-Schnittstellen zurückgeleiteten RF-Signale, um die RF-Schnittstelle zu ermitteln, an der die Rauschinterferenz vorliegt.

7. Rückweg-Rauschüberwachungseinrichtung, wobei die Einrichtung umfasst:
a) ein Kombinationsmodul (601, 701), aufweisend einen Combiner (27, 47) mit mehreren Eingangsanschlüssen, verbunden mit einer entsprechenden Mehrzahl von RF-Schnittstellen (02a) und ausgelegt zum Zusammenführen von durch RF-Schnittstellen zurückgeleiteten RF-Signalen, um ein erstes RF-Signal zu erhalten; und
b) ein zweites Sendeempfängermodul (602, 702), ausgelegt zum Senden des ersten RF-Signals zu einer Hub-Station; wobei
b1) das zweite Sendeempfängermodul (602, 702) ferner ausgelegt ist zum Empfangen (205) eines ersten, von der Hub-Station gesendeten digitalen Signals, wobei das erste digitale Signal verwendet wird zum Angeben (204) einer Frequenz und/oder eines Frequenzbands von Rauschinterferenz;
b2) die Einrichtung ferner ein erstes Abtastmodul (703) umfasst, wobei
b3) das erste Abtastmodul (703) ausgelegt ist zum Abtasten (206) von einigen der durch die RF-Schnittstellen zurückgeleiteten RF-Signale und Umwandeln (206) der abgetasteten Signale, um ein zweites digitales Signal zu erhalten, wobei Frequenzen und/oder Frequenzbänder der einigen der durch die RF-Schnittstellen zurückgeleiteten RF-Signale gleich der Frequenz und/oder dem Frequenzband der Rauschinterferenz sind; und
b4) das zweite Sendeempfängermodul (602, 702) ferner ausgelegt ist zum Senden (207) des zweiten digitalen Signals zur Hub-Station.

8. Einrichtung nach Anspruch 7, wobei
das zweite Sendeempfängermodul (702) ferner ausgelegt ist zum Empfangen eines dritten, von der Hub-Station (01) gesendeten digitalen Signals;
die Einrichtung ferner ein zweites Abtastmodul (704) umfasst, wobei das zweite Abtastmodul (704) dafür ausgelegt ist, entsprechend der Anweisung durch das dritte digitale Signal, die durch die RF-Schnittstellen zurückgeleiteten RF-Signale nacheinander und basierend auf Zeiträumen abzutasten, um ein zweites RF-Signal zu erhalten; und
das zweite Sendeempfängermodul (704) ferner ausgelegt ist zum Senden des zweiten RF-Signals zur Hub-Station.

9. Rückweg-Rauschüberwachungssystem, wobei das System eine erste Einrichtung und eine zweite Einrichtung umfasst, wobei
die erste Einrichtung die Einrichtung nach einem der Ansprüche 5 oder 6 ist und die zweite Einrichtung die Einrichtung nach einem der Ansprüche 7 oder 8 ist.

## Revendications

1. Procédé de surveillance du bruit dans un canal de retour, dans lequel le procédé comprend les étapes consistant à :
a) recevoir (202), par une station pivot (01), un signal optique modulé par un premier signal à fréquence radio RF envoyé par un noeud de fibre FN (02), dans lequel le premier signal RF est obtenu au moyen d'un combinateur (27, 47) au niveau du FN ayant plusieurs ports d'entrée respectivement connectés à une pluralité d'interfaces RF (02a) et adapté pour combiner (101, 201) les signaux RF renvoyés par l'intermédiaire d'interfaces RF (02a) du FN ; et
b) déterminer (103), en fonction du premier signal RF, s'il existe une interférence de bruit sur l'une des interfaces RF ; et
c) dans lequel la détermination (103), en fonction du premier signal RF, de l'existence éventuelle d'une interférence de bruit sur l'une des interfaces RF comprend les étapes consistant à :
c1) déterminer (203) si le bruit présent dans le premier signal RF dépasse un seuil ; et
c2) lorsque le bruit présent dans le premier signal RF ne dépasse pas le seuil, déterminer (203) que l'interférence de bruit n'existe sur aucune des interfaces RF ; ou
c3) lorsque le bruit présent dans le premier signal RF dépasse le seuil, déterminer (203) que l'interférence de bruit existe sur au moins une des interfaces RF ; et
d) dans lequel, après avoir déterminé que l'interférence de bruit existe sur au moins une des interfaces RF, le procédé comprend en outre les étapes consistant à :
d1) déterminer (204) une fréquence et/ou une bande de fréquences de l'interférence de bruit dans le premier signal RF ;
d2) recevoir (207) un second signal numérique envoyé par le FN, dans lequel le second signal numérique est envoyé par le FN après que le FN a reçu (205) un premier signal numérique envoyé par la station pivot, le premier signal numérique est utilisé pour indiquer la fréquence et/ou la bande de fréquences de l'interférence de bruit, le second signal numérique est obtenu par le FN au moyen d'une conversion après que le FN a échantillonné une partie des signaux RF renvoyés par l'intermédiaire des interfaces RF, et les fréquences et/ou les bandes de fréquences de ladite partie des signaux RF renvoyés par l'intermédiaire des interfaces RF sont identiques à la fréquence et/ou à la bande de fréquences de l'interférence de bruit ;
d3) convertir (208) le second signal numérique pour obtenir ladite partie des signaux RF renvoyés par l'intermédiaire des interfaces RF ; et
d4) calculer (209) le bruit présent dans ladite partie des signaux RF qui sont renvoyés par l'intermédiaire des interfaces RF, pour déterminer l'interface RF sur laquelle l'interférence de bruit existe.

2. Procédé selon la revendication 1, dans lequel, après avoir déterminé que l'interférence de bruit existe sur au moins une des interfaces RF, le procédé comprend en outre les étapes consistant à :
recevoir (306) un second signal RF envoyé par le FN, dans lequel le second signal RF est envoyé par le FN après que le FN a reçu (304) un troisième signal numérique envoyé par la station pivot, le troisième signal numérique est utilisé pour donner pour instruction au FN d'échantillonner (305), en séquence et sur la base de périodes de temps, les signaux RF renvoyés par l'intermédiaire des interfaces RF, et le second signal RF est obtenu par le FN en échantillonnant (305), en séquence et sur la base des périodes de temps, les signaux RF renvoyés par l'intermédiaire des interfaces RF ;
rétablir (307), à partir du second signal RF, les signaux RF renvoyés par l'intermédiaire des interfaces RF ; et
calculer (308) les rapports signal sur bruit des signaux RF rétablis qui sont renvoyés par l'intermédiaire des interfaces RF, afin de déterminer l'interface RF sur laquelle l'interférence de bruit existe.

3. Procédé de surveillance du bruit dans un canal de retour, dans lequel le procédé comprend les étapes consistant à :
a) combiner (101, 201), au moyen d'un combinateur (27, 47) au niveau d'un noeud de fibre FN ayant plusieurs ports d'entrée connectés respectivement à une pluralité d'interfaces RF (02a), les signaux à fréquence radio RF renvoyés par l'intermédiaire des interfaces RF du FN pour obtenir un premier signal RF ; et
b) envoyer (102, 202) le premier signal RF à une station pivot ; dans lequel
c) après l'envoi du premier signal RF à une station pivot, le procédé comprend en outre les étapes consistant à :
c1) recevoir (S205) un premier signal numérique envoyé par la station pivot, le premier signal numérique étant utilisé pour indiquer une fréquence et/ou une bande de fréquences d'interférence de bruit;
c2) échantillonner (206) une partie des signaux RF renvoyés par l'intermédiaire des interfaces RF et convertir les signaux échantillonnés pour obtenir un second signal numérique, les fréquences et/ou les bandes de fréquences de ladite partie des signaux RF renvoyés par l'intermédiaire des interfaces RF étant identiques à la fréquence et/ou à la bande de fréquences de l'interférence de bruit; et
c3) envoyer (207) le second signal numérique à la station pivot.

4. Procédé selon la revendication 3, dans lequel, après l'envoi du premier signal RF à une station pivot, le procédé comprend en outre les étapes consistant à :
recevoir (304) un troisième signal numérique envoyé par la station pivot ;
comme ordonné par le troisième signal numérique, échantillonner (305), en séquence et en fonction des périodes de temps, les signaux RF renvoyés par l'intermédiaire des interfaces RF, pour obtenir un second signal RF ; et
envoyer (306) le second signal RF à la station pivot.

5. Dispositif de surveillance du bruit dans un canal de retour, dans lequel le dispositif comprend :
a) un premier module émetteur-récepteur (401), configuré pour recevoir un signal optique modulé par un premier signal à fréquence radio RF envoyé par un noeud de fibre FN, dans lequel le premier signal RF est obtenu au moyen d'un combinateur (27, 47) au niveau du FN ayant plusieurs ports d'entrée respectivement connectés à une pluralité d'interfaces RF (02a) et adapté pour combiner les signaux RF renvoyés par l'intermédiaire d'interfaces RF du FN ; et
b) un premier module de détermination (402), configuré pour déterminer, en fonction du premier signal RF, si une interférence de bruit existe sur l'une des interfaces RF ; dans lequel le premier module de détermination (402) comprend :
b1) une unité d'évaluation (5021), configurée pour déterminer si le bruit présent dans le premier signal RF dépasse un seuil ;
b2) une première unité de détermination (5022), configurée pour : lorsque le bruit présent dans le premier signal RF ne dépasse pas le seuil, déterminer que l'interférence de bruit n'existe sur aucune des interfaces RF ; et
b3) une seconde unité de détermination (5023), configurée pour : lorsque le bruit présent dans le premier signal RF dépasse le seuil, déterminer que l'interférence de bruit existe sur au moins une des interfaces RF ;
c) dans lequel le dispositif comprend en outre un second module de détermination (503), dans lequel
c1) le second module de détermination (503) est configuré pour déterminer (204) une fréquence et/ou une bande de fréquences de l'interférence de bruit dans le premier signal RF lorsqu'il est déterminé que l'interférence de bruit existe sur au moins une des interfaces RF ;
c2) le premier module émetteur-récepteur (401) est en outre configuré pour recevoir (207) un second signal numérique envoyé par le FN, dans lequel le second signal numérique est envoyé par le FN après que le FN a reçu un premier signal numérique envoyé par la station pivot, le premier signal numérique est utilisé pour indiquer la fréquence et/ou la bande de fréquences de l'interférence de bruit, le second signal numérique est obtenu par le FN par conversion après que le FN a échantillonné une partie des signaux RF renvoyés par l'intermédiaire des interfaces RF, et les fréquences et/ou les bandes de fréquences de ladite partie des signaux RF renvoyés par l'intermédiaire des interfaces RF sont identiques à la fréquence et/ou à la bande de fréquences de l'interférence de bruit ; et
c3) le second module de détermination (503) est en outre configuré pour : convertir (208) le second signal numérique pour obtenir ladite partie des signaux RF renvoyée par l'intermédiaire des interfaces RF ; et calculer (209) le bruit présent dans ladite partie des signaux RF renvoyés par l'intermédiaire des interfaces RF, pour déterminer l'interface RF sur laquelle l'interférence de bruit existe.

6. Dispositif selon la revendication 5, dans lequel le dispositif comprend en outre un troisième module de détermination (504), dans lequel
le premier module émetteur-récepteur (501) est en outre configuré pour recevoir un second signal RF envoyé par le FN, dans lequel le second signal RF est envoyé par le FN après que le FN a reçu un troisième signal numérique envoyé par la station pivot, le troisième signal numérique est utilisé pour donner pour instruction au FN d'échantillonner, en séquence et sur la base de périodes de temps, les signaux RF renvoyés par l'intermédiaire de interfaces RF, et le second signal RF est obtenu par le FN en échantillonnant, en séquence et sur la base des périodes de temps, les signaux RF renvoyés par l'intermédiaire des interfaces RF ; et
le troisième module de détermination (504) est configuré pour : rétablir, à partir du second signal RF, les signaux RF renvoyés par l'intermédiaire des interfaces RF ; et calculer les rapports signal sur bruit des signaux RF rétablis qui sont renvoyés par l'intermédiaire des interfaces RF, afin de déterminer l'interface RF sur laquelle l'interférence de bruit existe.

7. Dispositif de surveillance du bruit dans un canal de retour, dans lequel le dispositif comprend :
a) un module de combinaison (601, 701) comprenant un combinateur (27, 47) ayant plusieurs ports d'entrée connectés respectivement à une pluralité d'interfaces RF (02a) et configuré pour combiner des signaux à fréquence radio RF renvoyés par des interfaces RF, afin d'obtenir un premier signal RF ; et
b) un second module émetteur-récepteur (602, 702) configuré pour envoyer le premier signal RF à une station pivot ; dans lequel
b1) le second module émetteur-récepteur (602, 702) est en outre configuré pour recevoir (205) un premier signal numérique envoyé par la station pivot, le premier signal numérique étant utilisé pour indiquer (204) une fréquence et/ou une bande de fréquences de l'interférence de bruit ;
b2) le dispositif comprend en outre un premier module d'échantillonnage (703), dans lequel
b3) le premier module d'échantillonnage (703) est configuré pour : échantillonner (206) une partie des signaux RF renvoyés par l'intermédiaire des interfaces RF et convertir (206) les signaux échantillonnés pour obtenir un second signal numérique ; dans lequel les fréquences et/ou les bandes de fréquences de ladite partie des signaux RF renvoyés par l'intermédiaire des interfaces RF sont identiques à la fréquence et/ou à la bande de fréquences de l'interférence de bruit ; et
b4) le second module émetteur-récepteur (602, 702) est en outre configuré pour envoyer (207) le second signal numérique à la station pivot.

8. Dispositif selon la revendication 7, dans lequel
le second module émetteur-récepteur (702) est en outre configuré pour recevoir un troisième signal numérique envoyé par la station pivot (01) ;
le dispositif comprend en outre un second module d'échantillonnage (704), dans lequel le second module d'échantillonnage (704) est configuré pour : comme ordonné par le troisième signal numérique, échantillonner, en séquence et en fonction de périodes de temps, les signaux RF renvoyés par l'intermédiaire des interfaces RF, pour obtenir un second signal RF ; et
le second module émetteur-récepteur (704) est en outre configuré pour envoyer le second signal RF à la station pivot.

9. Système de surveillance du bruit dans un canal de retour, dans lequel le système comprend un premier dispositif et un second dispositif, dans lequel
le premier dispositif est le dispositif selon l'une quelconque des revendications 5 et 6, et le second dispositif est le dispositif selon l'une quelconque des revendications 7 et 8.
